(19) Europäisches Patentamt / European Patent Office / Office européen des brevets

(11) **EP 4 672 680 A1**

(12) **EUROPEAN PATENT APPLICATION**

(43) Date of publication:
31.12.2025  Bulletin 2026/01

(21) Application number: 24216544.7

(22) Date of filing: 29.11.2024

(51) International Patent Classification (IPC):
*H04L 12/46* (2006.01)    *H04L 45/00* (2022.01)

(52) Cooperative Patent Classification (CPC):
**H04L 12/4633;** H04L 45/22; H04L 45/28;
H04L 47/125

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  24.06.2024  CN 202410816395

(71) Applicant: **New H3C Technologies Co., Ltd.
Hangzhou, Zhejiang 310052 (CN)**

(72) Inventors:
• **Li, Yueguang
Beijing, 100102 (CN)**
• **Wang, Yongwei
Beijing, 100102 (CN)**

(74) Representative: **Zimmermann & Partner
Patentanwälte mbB
Postfach 330 920
80069 München (DE)**

Remarks:
Amended claims in accordance with Rule 137(2) EPC.

(54) **DATA TRANSMISSION METHOD AND APPARATUS, DEVICE AND MEDIUM**

(57) Examples of the present disclosure provide a data transmission method and apparatus, a device and a medium, which relate to the technical field of communication, and is applied to a first gateway device included in a first site, wherein the method includes sending a first data stream to a second site through a first tunnel group, wherein the first tunnel group includes tunnels between the first gateway device and gateway devices included in the second site passing through a first WAN; in response to determining that all of the tunnels included in the first tunnel group are abnormal, sending the first data stream to the second site through a second tunnel group, wherein the second tunnel group includes tunnels between the first gateway device and the gateway devices included in the second site passing through a second WAN, wherein a priority of the second WAN is lower than that of the first WAN. By applying the technical solution provided by the example of the present disclosure, a control granularity of a silent setting in a cold standby technology can be reduced.

EP 4 672 680 A1

**Description**

**Technical Field**

The present disclosure relates to the technical field of communication, and in particular to a data transmission method, and apparatus, a device and a medium.

**Background**

With the development of communication technology, Ethernet Virtual Private Network (EVPN) is increasingly used in enterprise and operator scenarios, and enterprises have a variety of network choices. In order to ensure the stability of service communications and reduce costs, the enterprises will choose various types of wide area network (WAN) exports and use Point to Multiple Point (P2MP) tunneling method to access various types of networks; and will use a cold standby technology to set some high-cost tunnels to a silent status and transmit data by using low-cost tunnels; and will enable, in response to determining that the low-cost tunnels are abnormal, these high-cost tunnels, that is, transmit data by using these high-cost tunnels.

In the above data transmission method, the silent setting is for all tunnels under a WAN port, which has an issue of coarse control granularity.

**Summary**

The purpose of examples of the present disclosure is to provide a data transmission method and apparatus, a device and a medium to reduce a control granularity of the silent setting in the cold standby technology. The specific technical solutions are as follows.

In a first aspect, an example of the present disclosure provides a data transmission method, which is applied to a first gateway device included in a first site, the method including:

sending a first data stream to a second site through a first tunnel group, wherein the first tunnel group includes tunnels between the first gateway device and gateway devices included in the second site passing through a first wide area network WAN;

in response to determining that all of the tunnels included in the first tunnel group are abnormal, sending the first data stream to the second site through a second tunnel group, wherein the second tunnel group includes tunnels between the first gateway device and the gateway devices included in the second site passing through a second WAN, and a priority of the second WAN is lower than that of the first WAN.

In some examples, the first site further includes a second gateway device; in response to determining that all of the tunnels included in the first tunnel group are abnormal, the method further includes:

determining a status of each tunnel included in a third tunnel group, wherein the third tunnel group includes tunnels between the second gateway device and the gateway devices included in the second site passing through the first WAN;

in response to determining that all of the tunnels included in the third tunnel group are abnormal, sending the first data stream to the second site through the second tunnel group.

In some examples, the method further includes:
in response to determining that a tunnel included in the third tunnel group is normal, sending the first data stream to the second gateway device, to cause the second gateway device to send the first data stream to the second site through the third tunnel group.

In some examples, sending the first data stream to the second site through the second tunnel group includes:

obtaining a minimum value between a first bandwidth corresponding to one or more data streams carried in the first tunnel group and a preset bandwidth corresponding to the second tunnel group, wherein the preset bandwidth is a maximum bandwidth that is allowed to be used by a user to transmit a data stream by using the second tunnel group;

in response to determining that the minimum value is less than an available bandwidth of the second tunnel group, sending the first data stream to the second site through the second tunnel group.

In some examples, the first site further includes a second gateway device; the method further includes:
in response to determining that the minimum value is greater than or equal to the available bandwidth of the second tunnel group, sending the first data stream to the second site through the second tunnel group and a fourth tunnel group, wherein the fourth tunnel group includes tunnels between the second gateway device and the gateway devices included in the second site passing through the second WAN.

In some examples, sending the first data stream to the second site through the second tunnel group and the fourth tunnel group includes:

selecting a tunnel that meets a preset link quality condition from the tunnels included in the fourth tunnel group;

sending the first data stream to the second site through the tunnels included in the second tunnel group and the selected tunnel.

In some examples, the first bandwidth is determined by:

obtaining a second bandwidth corresponding to one or more data streams carried in all of the tunnels included in the first tunnel group within a collection period;

calculating an average of second bandwidths corresponding to a preset number of collection periods, to obtain the first bandwidth.

In some examples, the available bandwidth is determined by:

obtaining a third bandwidth corresponding to one or more data streams currently carried in all of the tunnels included in the second tunnel group;

calculating a difference value between a maximum bandwidth available for carrying one or more data streams of the second tunnel group and the third bandwidth, to obtain the available bandwidth.

In some examples, the method further includes:
sending a second data stream to a third site through a fifth tunnel group, wherein the fifth tunnel group includes tunnels between the first gateway device and gateway devices included in the third site passing through the first WAN.

In some examples, the method further includes:

receiving an identifier of a target tunnel issued by a controller;

determining target priority configuration information corresponding to a WAN indicated by the target tunnel according to pre-stored correspondences between WANs and priority configuration information;

setting the target priority configuration information as attribute information of the target tunnel.

In a second aspect, an example of the present disclosure provides a data transmission apparatus, which is applied to a first gateway device included in a first site, the apparatus including:

a first sending module, to send a first data stream to a second site through a first tunnel group, wherein the first tunnel group includes tunnels between the first gateway device and gateway devices included in the second site passing through a first WAN;

a second sending module, to send the first data stream to the second site through a second tunnel group in response to determining that all of the tunnels included in the first tunnel group are abnormal, wherein the second tunnel group includes tunnels between the first gateway device and the gateway devices included in the second site passing through a second WAN, and a priority of the second WAN is lower than that of the first WAN.

In some examples, the first site further includes a second gateway device; and the second sending module is further to:
determine a status of each tunnel included in a third tunnel group in response to determining that all of the tunnels included in the first tunnel group are abnormal, wherein the third tunnel group includes tunnels between the second gateway device and the gateway devices included in the second site passing through the first WAN; and send the first data stream to the second site through the second tunnel group in response to determining that all of the tunnels included in the third tunnel group are abnormal.

In some examples, the second sending module is further to:
send the first data stream to the second gateway device in response to determining that a tunnel included in the third tunnel group is normal, to cause the second gateway device to send the first data stream to the second site through the third tunnel group.

In some examples, the second sending module is specifically to:

obtain a minimum value between a first bandwidth corresponding to one or more data streams carried in the first tunnel group and a preset bandwidth corresponding to the second tunnel group, wherein the preset bandwidth is a maximum bandwidth which is allowed to be used by a user to transmit a data stream by using the second tunnel group;

send the first data stream to the second site through the second tunnel group in response to determining that the minimum value is less than an available bandwidth of the second tunnel group.

In some examples, the first site further includes the second gateway device; and the second sending module is further to:
send the first data stream to the second site through the second tunnel group and a fourth tunnel group in response to determining that the minimum value is greater than or equal to the available bandwidth of the second tunnel group, wherein the fourth tunnel group includes tunnels between the second gateway device and the gateway devices included in the second site passing through the second WAN.

In some examples, the second sending module is specifically to:

select a tunnel that meets a preset link quality condition from the tunnels included in the fourth tunnel group;

send the first data stream to the second site through the tunnels included in the second tunnel group and the selected tunnel.

In some examples, the apparatus further includes a first determining module to determine the first bandwidth, wherein the first determining module is specifically to:

obtain a second bandwidth corresponding to one or more data streams carried in all of the tunnels included in the first tunnel group within a collection period;

calculate an average of second bandwidths corresponding to a preset number of collection periods, to obtain the first bandwidth.

In some examples, the apparatus further includes a second determining module to determine the available bandwidth, wherein the second determining module is specifically to:

obtain a third bandwidth corresponding to one or more data streams currently carried in all of the tunnels included in the second tunnel group;

calculate a difference value between a maximum bandwidth available for carrying one or more data streams of the second tunnel group and the third bandwidth, to obtain the available bandwidth.

In some examples, the apparatus further includes a third sending module, wherein the third sending module is to:
send a second data stream to a third site through a fifth tunnel group, wherein the fifth tunnel group includes tunnels between the first gateway device and gateway devices included in the third site passing through the first WAN.

In some examples, the apparatus further includes a configuration module, wherein the configuration module is to:

receive an identifier of a target tunnel issued by a controller;

determine target priority configuration information corresponding to a WAN indicated by the target tunnel according to pre-stored correspondences between WANs and priority configuration information;

set the target priority configuration information attribute information of the target tunnel.

In a third aspect, an example of the present disclosure provides an electronic device, including a processor, a communication interface, a memory, and a communication bus, wherein the processor, the communication interface, and the memory communicate with each other through the communication bus;

the memory is to store a computer program;

the processor is to carry out the method in the first aspect when executing the program stored in the memory.

In a fourth aspect, an example of the present disclosure provides a computer-readable storage medium having a computer program stored therein, wherein the computer program, when executed by a processor, carries out the method in the first aspect.

In yet another example of the present disclosure, a computer program product containing instructions is provided, wherein the instructions when running on a computer, cause a computer to carry out the method in the first aspect.

Beneficial effects of the examples of the present disclosure are as follows:

In the technical solution provided by the example of the present disclosure, the first gateway device included in the first site establishes tunnel groups, namely, the first tunnel group and the second tunnel group, with the gateway devices included in the second site respectively through the first WAN and the second WAN. In response to determining that the first gateway device sends a data stream to the gateway devices included in the second site, the first tunnel group corresponding to the high-priority first WAN is preferentially used to transmit the data stream, and the second tunnel group corresponding to the low-priority second WAN is in the silent status, that is, the first tunnel group is an active tunnel group between the first gateway device and the second site, and the second tunnel group is a standby tunnel group between the first gateway device and the second site. In response to determining that all of the tunnels included in the first tunnel group is abnormal, the first gateway device enables the standby tunnel group between the first gateway device and the second site, and then continues transmitting the data stream by using the second tunnel group, thereby ensuring the stability of the service.

One WAN port can establish multiple tunnel groups with multiple sites. In the example of the present disclosure, in response to determining that one tunnel group is abnormal, only a standby tunnel group corresponding to the tunnel group needs to be enabled, and it is not necessary to enable standby tunnel groups corresponding to all tunnel groups under a WAN port which corresponds to the tunnel group. Compared with the control of a standby tunnel group through a WAN port in the related art, the control granularity of the silent setting in the cold standby technology is reduced, the issue of coarse control granularity is solved, and a standby tunnel group can be flexibly used for data transmission.

Of course, it is not necessary for any product or method implementing the present disclosure to achieve all the advantages described above simultaneously.

**Brief Description of the Drawings**

In order to more clearly describe the technical solutions of the examples of the present disclosure or the prior art, accompanying drawings that need to be used in the examples or the prior art will be briefly described below. Obviously, the accompanying drawings described below are for only some of the examples of the present disclosure. Those skilled in the art can obtain other examples based on these accompanying drawings.

Fig. 1 is a first schematic diagram of a data transmission system provided by an example of the present disclosure;

Fig. 2 is a first schematic diagram of a data transmission method provided by an example of the present disclosure;

Fig. 3 is a second schematic diagram of a data transmission method provided by an example of the present disclosure;

Fig. 4 is a third schematic diagram of a data transmission method provided by an example of the present disclosure;

Fig. 5 is a schematic diagram of a priority configuration method provided by an example of the present disclosure;

Fig. 6 is a first schematic diagram of a data transmission scenario provided by an example of the present disclosure;

Fig. 7 is a second schematic diagram of a data transmission scenario provided by an example of the present disclosure;

Fig. 8 is a third schematic diagram of a data transmission scenario provided by an example of the present disclosure;

Fig. 9 is a fourth schematic diagram of a data transmission scenario provided by an example of the present disclosure;

Fig. 10 is a fifth schematic diagram of a data transmission scenario provided by an example of the present disclosure;

Fig. 11 is a second schematic diagram of a data transmission system provided by an example of the present disclosure;

Fig. 12 is a schematic structure diagram of a data transmission apparatus provided by an example of the present disclosure;

Fig. 13 is a schematic structure diagram of an electronic device provided by an example of the present disclosure.

## Detailed Description

The technical solutions in the examples of the present disclosure will be clearly and completely described below with reference to the accompanying drawings in the examples of the present disclosure. Obviously, the described examples are only some, and not all, of the examples of the present disclosure. All other examples obtained by those skilled in the art based on the examples of the present disclosure fall into the scope of protection of the present disclosure.
To facilitate understanding, terms appearing in the examples of the present disclosure are explained below.
Gateway device: an edge device of a local area network (LAN), wherein the gateway device includes one or more LAN ports and one or more WAN ports. The gateway device accesses the LAN through the LAN ports and accesses the WAN through the WAN ports, that is, the LAN accesses the WAN through the gateway device. Here, a network type of a WAN port is a network type of the WAN to which the WAN port is connected, that is, network types of WAN ports connected to the same WAN are the same. One gateway device may include multiple network types of WAN ports, that is, one gateway device may access multiple types of WANs. The gateway device may be such as a router or a switching device. In the examples of the present disclosure, the type of the gateway device is not limited.
Site: including one or more gateway devices. In the examples of the present disclosure, the number of gateway devices included in the site is not limited. In the examples of the present disclosure, the site can be divided into a hub site and a spoke site. One site can be the hub site or the spoke site. In response to determining that one site is connected to multiple other sites, the site is a hub site relative to the multiple other sites, and the multiple other sites are spoke sites relative to the hub site.
P2MP tunnel: in response to determining that one gateway device establishes multiple tunnels with multiple gateway devices through one WAN port, these multiple tunnels constitute a P2MP tunnel. A tunnel established by the gateway device with another gateway device through one WAN port can be a Transport Tunnel Endpoint (TTE) tunnel or other types of tunnels.
Transmission network: being composed of one or more WANs. The network type of the transmission network may include, but is not limited to, Multiple Spanning Tree Protocol (MSTP), Multiprotocol Label Switching (MPLS) and 5th Generation Mobile Communication Technology (5G), and the like. In practical applications, WAN can be classified according to the network type of the transmission network, and in this case, one transmission network includes one WAN, and the network type of the WAN is the network type of the transmission network. WAN can also be classified according to the network type of the transmission network, an operator, etc., and in this case, one transmission network can include multiple WANs, and the network types of the WANs are determined by the network type of the transmission network and the operator, etc.
With the development of communication technology, EVPN is increasingly used in enterprise and operator scenarios, and enterprises have a variety of network choices. In order to ensure the stability of service communications and reduce costs, the enterprises will choose various types of WAN exports and use P2MP tunneling method to access various types of networks; and will use a cold standby technology to set some high-cost tunnels to a silent status and transmit data by using low-cost tunnels; and will enable, in response to determining that the low-cost tunnels are abnormal, these high-cost tunnels, that is, transmit data by using these high-cost tunnels.
In the above data transmission method, the silent setting is for all tunnels under a WAN port, that is, in response to determining that a tunnel under a first WAN port is abnormal, and a high-cost tunnel in the silent status under a second WAN port needs to be enabled, all high-cost tunnels under the second WAN port need to be enabled at the same time. This silent setting has an issue of coarse control granularity, and in response to determining that only some tunnels under the first WAN port are abnormal, this silent setting will further cause other issues.
For example, in response to determining that only some tunnels under the first WAN port are abnormal, then in response to determining that high-cost tunnels in the silent status are enabled, all of data streams transmitted by normal tunnels under the first WAN port and data streams transmitted by abnormal tunnels will be transmitted through the high-cost tunnels, which will increase the cost of data transmission. Alternatively, in response to determining that only some tunnels under the first WAN port are abnormal, none high-cost tunnel in the silent status is enabled until all tunnels under the first WAN port are abnormal, which will result in the low data transmission efficiency, and issues of packet loss and low reliability.

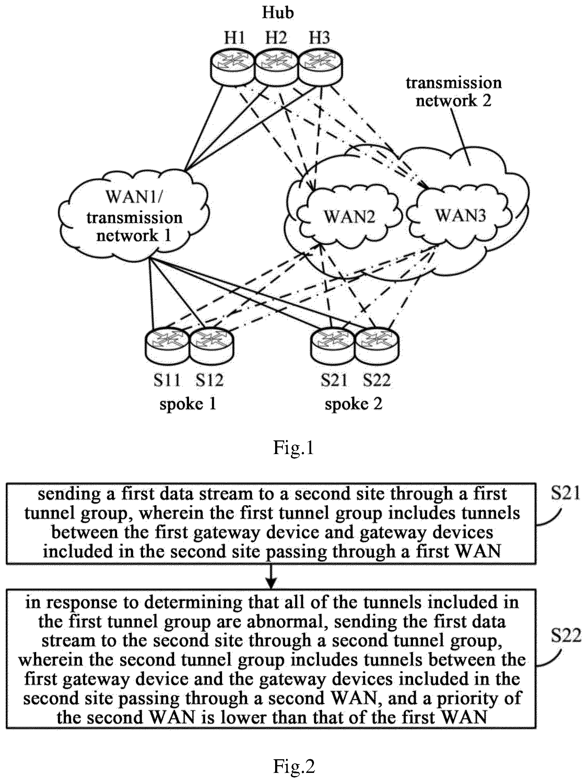

In order to solve the above issues, an example of the present disclosure provides a data transmission system, as shown in Fig. 1, including a hub site and multiple spoke sites. In Fig. 1, two spoke sites (spoke 1 site and spoke 2 site) are only taken as an example for illustration, which is not limiting.

In the data transmission system shown in Fig. 1, the hub site is a three-gateway site including three gateway devices, namely a gateway device H1, a gateway device H2, and a gateway device H3; the two spoke sites are dual-gateway sites, each of which includes two gateway devices, that is, the spoke 1 site includes a gateway device S11 and a gateway device S12, and the spoke 2 site includes a gateway device S21 and a gateway device S22. A transmission network 1 includes one WAN1. A transmission network 2 includes two WANs, namely WAN2 and WAN3.

Tunnels are established between each gateway device of the hub site and each gateway device of each spoke site through WAN ports corresponding to WAN1, WAN2, and WAN3. In Fig. 1, solid lines represent tunnels established through a WAN port corresponding to WAN1, that is, tunnels passing through WAN1; dotted lines represents tunnels established through a WAN port corresponding to WAN2, that is, tunnels passing through WAN2; and dot-dash lines represent tunnels established through a WAN port corresponding to WAN3, that is, tunnels passing through WAN3.

In Fig. 1, each WAN port corresponds to one P2MP tunnel. For example, four tunnels connected to the gateway device S11, the gateway device S12, the gateway device S21 and the gateway device S22 are established at the WAN1 port of the gateway device H1, and these four tunnels constitute one P2MP tunnel at the WAN1 port of the gateway device H1. For another example, three tunnels connected to the gateway device H1, the gateway device H2 and the gateway device H3 are established at the WAN1 port of the gateway device S11, and these three tunnels constitute one P2MP tunnel at the WAN1 port of the gateway device S11. In the example of the present disclosure, a P2MP tunnel is further divided based on a site by site basis, to divided the P2MP tunnel is divided into multiple tunnel groups, that is, multiple tunnels corresponding to the same site in one P2MP tunnel are divided into one tunnel group. As shown in Fig. 1, the P2MP tunnel at the WAN1 port of the gateway device H1 can be divided into a tunnel group 11 corresponding to the spoke 1 site and a tunnel group 12 corresponding to the spoke 2 site; the P2MP tunnel at the WAN1 port of the gateway device S11 corresponds to only one hub site, and therefore the P2MP tunnel at the WAN1 port of the gateway device S11 includes one tunnel group corresponding to the hub site.

In the example of the present disclosure, a WAN has a priority. The priority of the WAN can be designated according to cost, that is, the higher the cost is, the lower the priority is; the priority of the WAN can also be designated according to link quality, that is, the higher the link quality is, the higher the priority is; the priority of the WAN can also be designated according to multiple factors such as cost and link quality, and there is no limitation on this.

The priority of the WAN is a priority of a tunnel passing through the WAN, and the priority of the tunnel is a priority of a tunnel group including the tunnel. In the example of the present disclosure, the gateway device preferentially uses a high-priority tunnel group to transmit a data stream. In response to determining that the high-priority tunnel group is used to transmit the data stream, a low-priority tunnel group is in a silent status. That is, the high-priority tunnel group is an active tunnel group, and a low-priority tunnel group is a standby tunnel group. The gateway device transmits the data stream by using a cold standby technology.

Based on the above Fig. 1, referring to Fig. 2, which is a first schematic diagram of a data transmission method provided by an example of the present disclosure, the data transmission method is applied to a first gateway device included in a first site, wherein the first site can be a hub site or any spoke site, the first site includes one or more gateway devices, and the first gateway device can be any gateway device included in the first site. The above data transmission method includes the following blocks:

Block S21, sending a first data stream to a second site through a first tunnel group, wherein the first tunnel group includes tunnels between the first gateway device and gateway devices included in the second site passing through a first WAN.

Block S22, in response to determining that all of the tunnels included in the first tunnel group are abnormal, sending the first data stream to the second site through a second tunnel group, wherein the second tunnel group includes tunnels between the first gateway device and the gateway devices included in the second site passing through a second WAN, and a priority of the second WAN is lower than that of the first WAN.

In the technical solution provided by the example of the present disclosure, the first gateway device included in the first site establishes tunnel groups, namely, the first tunnel group and the second tunnel group, with the gateway devices included in the second site respectively through the first WAN and the second WAN. In response to determining that the first gateway device sends a data stream to the gateway devices included in the second site, the first tunnel group corresponding to the high-priority first WAN is preferentially used to transmit the data stream, and the second tunnel group corresponding to the low-priority second WAN is in the silent status, that is, the first tunnel group is an active tunnel group between the first gateway device and the second site, and the second tunnel group is a standby tunnel group between the first gateway device and the second site. In response to determining that all of the tunnels included in the first tunnel group are abnormal, the first gateway device enables the standby tunnel group between the first gateway device and the second site, and then continues transmitting the data stream by using the second tunnel group, thereby ensuring the stability of the service.

One WAN port can establish multiple tunnel groups with multiple sites. In the example of the present disclosure, in response to determining that one tunnel group is abnormal, only a standby tunnel group corresponding to the tunnel group needs to be enabled, and it is not necessary to enable standby tunnel groups corresponding to all tunnel groups under a WAN port which corresponds to the tunnel group. Compared with control of a standby tunnel group through a WAN port in the related art, a control granularity of the silent setting in the cold standby technology is reduced, the issue of coarse control granularity is solved, and a standby tunnel group can be flexibly used for data transmission.

In the above block S21, the first data stream is any data stream received from a LAN side of the first site through a LAN port of the first gateway device. The second site is any site connected to the first site, and the second site includes one or more gateway devices. The second site can be a spoke site or a hub site, which is specifically determined according to the type of the first site. For example, in response to determining that the first site is a hub site, the second site is a spoke site connected to the hub site; in response to determining that the first site is a spoke site, the second site is a hub site connected to the spoke site.

In the example of the present disclosure, the first tunnel group is a currently enabled tunnel group for data transmission between the first site and the second site, and a communication protocol of a data stream transmitted through the first tunnel group is the same as that of the first data stream. For the convenience of description, the tunnels included in the first tunnel group are referred to as first tunnels. The communication protocol may include but is not limited to MSTP, MPLS protocol, etc. The first tunnel group may be a tunnel group with the highest priority, and the first tunnel group is an active tunnel group.

Prior block S21, first tunnels passing through the first WAN can be established between the first gateway device and all or some of the gateway devices included in the second site through a WAN port (i.e., the first WAN port) corresponding to the first WAN, to obtain the first tunnel group. Taking the data transmission system shown in Fig. 1 as an example, in response to determining that the first WAN is WAN1, the first gateway device is the gateway device H1, and the second site is the spoke 1 site, the first tunnel group may include two first tunnels, namely, a tunnel between the gateway device H1 and the gateway device S11 of the spoke 1 site passing through WAN1, and a tunnel between the gateway device H1 and the gateway device S12 of the spoke 1 site passing through WAN1.

In the example of the present disclosure, the transmission network may include WANs with multiple priorities, at each of which there may be one or more WANs. One or more WANs have the same priority, that is, there may be one or more WANs with the same priority as the first WAN. To ensure correct transmission of a data stream, during data transmission, the first gateway device may receive the data stream from the LAN side through the LAN port, that is, receive the first data stream, and determine, according to description information of the first data stream, a tunnel group that matches the communication protocol of the first data stream and has the highest priority in the tunnel groups between the first gateway device and the second site, that is, determine the first tunnel group that is used to transmit the first data stream, and then send the first data stream to the second site through the first tunnel group passing through the first WAN by using the first WAN port. The gateway devices of the second site receive the first data stream sent by the first gateway device through the first tunnel group. Here, the number of first WANs may be one or more, and the number of first tunnel groups may be one or more.

In the example of the present disclosure, the first gateway device may send the data stream in any of the following methods.

Method 1, sending the data stream in a load balancing manner.

The first gateway device sends the first data stream to the second site through individual first tunnels included in the first tunnel group in a load balancing manner, thereby realizing multi-channel parallel transmission. For example, the first tunnel group includes two tunnels, namely Tunnel 1 and Tunnel 2. The first gateway device firstly sends one packet of the first data stream through Tunnel 1 and further sends one packet of the first data stream through Tunnel 2; then, the first gateway device sends one packet of the first data stream through tunnel 1 again, and further sends one packet of the first data stream through tunnel 2 again. In such way, the first data stream is sent cyclically, thereby realizing load balancing for Tunnel 1 and Tunnel 2.

In the example of the present disclosure, in response to determining that there are multiple first tunnel groups, the first gateway device sends the first data stream to the second site through individual first tunnels included in individual first tunnel groups in a load balancing manner. For example, there are two first tunnel groups, namely, a first tunnel group 1 and a first tunnel group 2. The first tunnel group 1 includes two tunnels, namely, Tunnel 11 and Tunnel 12, and the first tunnel group 2 includes two tunnels, namely, Tunnel 21 and Tunnel 22. The first gateway device firstly sends one packet of the first data stream through Tunnel 11, and then sends one packet of the first data stream through Tunnel 12, then sends one packet of the first data stream through Tunnel 21, and finally sends one packet of the first data stream through Tunnel 22. In such way, the first data stream is sent cyclically, thereby realizing load balancing for the first tunnel group 1 and the first tunnel groups 2.

Method 2, sending the data stream by using a tunnel with high link quality.

The first gateway device determines a quality score of each first tunnel based on a quality reference value such as link delay jitter and packet loss rate, etc., selects a first tunnel that meets a preset link quality condition, and sends the first data stream to the second site through the first tunnel that meets the preset link quality condition, thereby realizing multi-channel parallel transmission.

In an example of the present disclosure, the preset link quality condition may be a first preset number of tunnels with the highest quality scores. That is, the first gateway device selects the first preset number of first tunnels with the highest quality scores; and sends the first data stream to the second site through the first preset number of first tunnels with the highest quality scores, thereby realizing multi-channel parallel transmission. Here, the smaller the delay jitter and the packet loss rate are, the higher the quality score is.

The preset link quality condition may also be a tunnel with a quality score higher than a preset score threshold. That is, the first gateway device selects a first tunnel with a quality score higher than the preset score threshold; and sends the first data stream to the second site through the first tunnel with a quality score higher than the preset score threshold, thereby realizing multi-channel parallel transmission.

The preset link quality condition may also be a tunnel group with a quality score higher than a preset score threshold. That is, the first gateway device selects a second preset number of first tunnel groups with the highest quality scores; and sends the first data stream to the second site through individual first tunnels included in the second preset number of first tunnel groups with the highest quality scores in a load balancing manner.

The preset link quality condition may also be a tunnel group with a quality score higher than a preset score threshold. That is, the first gateway device selects a first tunnel group with a quality score higher than the preset score threshold; and sends the first data stream to the second site through individual first tunnels included in the first tunnel group with a quality score higher than the preset score threshold in a load balancing manner.

In the example of the present disclosure, the first gateway device may also send the data stream in other methods, such as randomly selecting one or more tunnels from the first tunnel group to send the first data stream, and this is no limitation on this.

In the above block S22, the first gateway device can detect a status of each first tunnel included in the first tunnel group to determine whether the first tunnel is abnormal, that is, to determine whether the first tunnel can be used to send data streams normally. In response to determining that the first gateway device is sending the first data stream, the first gateway device can collect information of the first tunnel group through Intelligent Network Quality Analyzer (iNQA) to determine whether the first tunnel included in the first tunnel group is broken. In response to determining that the first tunnel is broken, the first gateway device can determine that the first tunnel is abnormal. Based on a detection result of the first gateway device on each first tunnel included in the first tunnel group, it can be specifically divided into the following three cases.

Case 1, all of the first tunnels included in the first tunnel group are normal, then the first gateway device determines that the first tunnels can be used to send the data stream, and continues to send the first data stream to the second site through the first tunnel group.

Case 2, some of the first tunnels included in the first tunnel group are normal, then the first gateway device determines that the some of the first tunnels can be used to send the data stream. In this case, the first gateway device can continue to send the first data stream to the second site through the normal first tunnels included in the first tunnel group.

Case 3, all of the first tunnels included in the first tunnel group are abnormal, then the first gateway device determines that none of the first tunnels can be used to send the data stream.

In the example of the present disclosure, in response to determining that all of the first tunnels included in the first tunnel group are abnormal, the first gateway device enables the standby tunnel group (i.e., the second tunnel group), and sends the first data stream to the second site through the second tunnel group passing through the second WAN by using a WAN port (i.e., the second WAN port) corresponding to the second WAN. The gateway device of the second site receives the first data stream sent by the first gateway device through the second tunnel group.

The second tunnel group is a standby tunnel group for data transmission between the first site and the second site, and the second tunnel group is in the silent status. For ease of description, tunnels included in the second tunnel group will be referred to as second tunnels in the following. Still taking the data transmission system shown in Fig. 1 as an example for description, in response to determining that the second WAN is WAN2, the first gateway device is the gateway device H1, and the second site is the spoke 1 site, the second tunnel group may include two second tunnels, namely, a tunnel between the gateway device H1 and the gateway device S11 of the spoke 1 site passing through WAN2, and a tunnel between the gateway device H1 and the gateway device S12 of the spoke 1 site passing through WAN2.

In the example of the present disclosure, prior sending the first data stream to the second site through the second tunnel group, the first gateway device may also detect the status of each second tunnel included in the second tunnel group. In response to determining that there is a normal second tunnel in the second tunnel group, block S22 is executed to send the first data stream to the second site through the normal second tunnel.

In the example of the present disclosure, the transmission network may include WANs with multiple priorities, at each of which there may be one or more WANs. One or more WANs have the same priority. To ensure the correct transmission of a data stream, the first gateway device may determine, according to the description information of the first data stream, a second tunnel group that matches the communication protocol of the first data stream and has the highest priority in the tunnel groups between the first gateway device and the second site that have lower priorities than the first tunnel group, and then sends the first data stream to the second site through the second tunnel group passing through the second WAN by using the second WAN port. Here, the number of second WANs may be one or more, and the number of second tunnel groups may be one or more.

The method of sending the first data stream to the second site by the first gateway device through the second tunnel group can be specifically referred to the relevant description of sending the first data stream to the second site through the first tunnel group in block S21, which will not be repeated here.

In the example of the present disclosure, in selecting a standby tunnel group, the first gateway device can, according to a diversion configuration, preferentially use a standby tunnel group (such as the second tunnel group mentioned above) in a local device to send the data stream. That is, a standby tunnel group at an entry location of service traffic (i.e., data stream) at the LAN side of the first site is preferentially enabled to send the data stream, thereby reducing service traffics traversing tunnels and improving the speed of data stream forwarding.

In some examples, the first site can also be connected to a third site through a fifth tunnel group. In this case, the first site is a hub site, the second site and the third site are spoke sites respectively, and the third site includes one or more gateway devices. The fifth tunnel group includes tunnels between the first gateway device and the gateway devices included in the third site passing through the first WAN, that is, the first tunnel group and the fifth tunnel group are established through the same WAN port on the first gateway device, and the first tunnel group and the fifth tunnel group pass through the same WAN. In response to determining that a data stream is transmitted between the first site and the third site, the above-mentioned data transmission method further includes: sending a second data stream to the third site through the fifth tunnel group. The gateway devices of the third site receives the second data stream sent by the first gateway device through the fifth tunnel group.

The fifth tunnel group is a currently enabled tunnel group for data transmission between the first site and the third site, and a communication protocol of the data stream transmitted by the fifth tunnel group is the same as that of the second data stream. For ease of description, tunnels included in the fifth tunnel group are referred to as fifth tunnels. The fifth tunnel group may be a tunnel group with the highest priority, and the fifth tunnel is an active tunnel.

Still taking the data transmission system shown in Fig. 1 as an example, in response to determining that the first WAN is WAN1, the first gateway device is the gateway device H1, the second site is the spoke 1 site, and the third site is the spoke 2 site, the first tunnel group and the fifth tunnel group constitute the P2MP tunnel at the WAN1 port of the gateway device H1, the first tunnel group is the tunnel group 11 corresponding to the spoke 1 site, and the fifth tunnel group is the tunnel group 12 corresponding to the spoke 2 site.

In sending the first data stream to the second site through the first tunnel group passing through the first WAN by using the first WAN port, the first gateway device can also receive a data stream from the LAN side through the LAN port, that is, receive the second data stream; determine, according to description information of the second data stream, a tunnel group that matches the communication protocol of the second data stream and has the highest priority in tunnel groups between the first gateway device and the third site, that is, determine the fifth tunnel group that is used to transmit the second data stream; and then send the second data stream to the third site through the fifth tunnel group passing through the first WAN by using the first WAN port. Here, the number of fifth tunnel groups can be one or more. The first data stream can be the same as the second data stream or different from the second data stream.

For different tunnel groups (such as the first tunnel group and the fifth tunnel group) under the same WAN port, the first gateway device can control the two tunnel groups respectively. In response to determining that all of the first tunnels included in the first tunnel group are detected to be abnormal, the first gateway device executes the above block S22 to send the first data stream to the second site through the second tunnel group, and at this time, the fifth tunnels included in the fifth tunnel group are normal, and thus the first gateway device can continue to send the second data stream to the third site through the fifth tunnel group by using the first WAN port.

In response to determining that all of the fifth tunnels included in the fifth tunnel group are abnormal, the first gateway device processes the second data stream transmitted by the fifth tunnel group by the above block S22. At this time, the first tunnels included in the first tunnel group are normal, and thus he first gateway device can continue to send the first data stream to the second site through the first tunnel group by using the first WAN port.

In the technical solution provided by the example of the present disclosure, the standby tunnel group is controlled on a tunnel group basis. Even if there are multiple tunnel groups under the same WAN port, it can be ensured that the multiple tunnel groups do not affect each other, thereby reducing the control granularity of the silent setting in the cold standby technology and solving the issue of coarse control granularity.

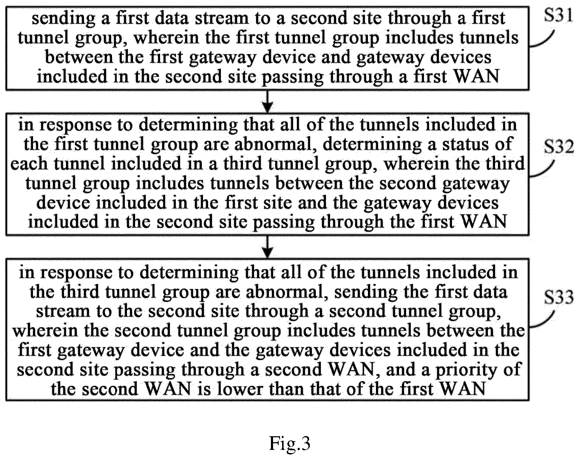

In some examples, the first site includes multiple gateway devices. In this case, based on the above data transmission method, an example of the present disclosure further provides a data transmission method, as shown in Fig. 3, including:

Block S31, sending a first data stream to a second site through a first tunnel group, wherein the first tunnel group includes tunnels between a first gateway device and gateway devices included in the second site passing through a first WAN. This is the same as the above block S21.

Block S32, in response to determining that all of the tunnels included in the first tunnel group are abnormal, determining a status of each tunnel included in a third tunnel group, wherein the third tunnel group includes tunnels between a second gateway device included in the first site and the gateway devices included in the second site passing through the first WAN.

Block S33, in response to determining that all of the tunnels included in the third tunnel group are abnormal, sending the first data stream to the second site through a second tunnel group, wherein the second tunnel group includes tunnels between the first gateway device and the gateway devices included in the second site passing through a second WAN, and a priority of the second WAN is lower than that of the first WAN.

In the technical solution provided by the example of the present disclosure, the first site further includes the second gateway device, and the second gateway device establishes a tunnel group, namely, the third tunnel group, with the gateway devices included in the second site through the first WAN. In response to determining that the first gateway device sends the data stream to the gateway devices included in the second site, the first tunnel group established by the first gateway device is preferentially used to transmit the data stream. At this time, the third tunnel group (i.e., the active tunnel group) established by the second gateway device and the second tunnel group (i.e., the standby tunnel group) corresponding to the low-priority second WAN are both in the silent status. In response to determining that all of the tunnels included in the first tunnel group are abnormal, the first gateway device firstly determines the status of the third tunnel group, and in response to determining that all of the active tunnels are abnormal, the second tunnel group is used to continue to transmit the data stream to ensure the stability of the service. It can be seen that in the example of the present disclosure, the standby tunnel group is controlled on a tunnel group basis, which reduces the control granularity of the silent setting in the cold standby technology and solves the issue of coarse control granularity, and the active tunnel group with lower cost is used to transmit data as much as possible, which reduces the cost of data stream transmission, thus realizing more flexible data transmission in the scenario of multiple gateways.

In the above block S32, in response to determining that all of the first tunnels included in the first tunnel group are determined to be abnormal by the first gateway device, that is, in case 3 in the above block S22, the first gateway device determines a tunnel group (such as the third tunnel group) established between another gateway device included in the first site (such as the second gateway device) and the gateway devices included in the second site and passing through the first WAN.

In the example of the present disclosure, the third tunnel group is a tunnel group for data transmission between the first site and the second site, and a communication protocol of the data stream transmitted by the third tunnel group is the same as that of the first data stream. The second gateway device is a gateway device other than the first gateway device included in the first site, and the number of second gateway devices can be one or more. For ease of description, tunnels included in the third tunnel group are referred to as third tunnels. The third tunnel group can be an active tunnel group. For the first gateway device, a priority of the third tunnel group is lower than that of the first tunnel group and higher than that of the second tunnel group.

Still taking the data transmission system shown in Fig. 1 as an example, in response to determining that the first WAN is WAN1, the first gateway device is the gateway device H1, and the second site is the spoke 1 site, the second gateway device can be the gateway device H2 and the gateway device H3. Taking the second gateway device being the gateway device H2 as an example, the third tunnel group can include two third tunnels, namely, a tunnel between the gateway device H2 and the gateway device S11 of the Spoke 1 site passing through WAN2, and a tunnel between the gateway device H2 and the gateway device S12 of the spoke 1 site passing through WAN2.

In the example of the present disclosure, in response to determining that all of the tunnels included in the first tunnel group are abnormal, the first gateway device determines, according to the description information of the first data stream, a tunnel group that matches the communication protocol of the first data stream and has the highest priority, i.e., the third tunnel group that is used to transmit the first data stream, in tunnel groups between the second gateway device and the second site. Here, the number of third tunnel groups can be one or more, and multiple third tunnel groups can belong to the same second gateway device or to different second gateway devices.

The first gateway device can detect the status of each third tunnel included in the third tunnel group to determine whether the third tunnel is abnormal, that is, to determine whether the third tunnel can send the data stream normally. Specifically, it can be divided into the following three cases, that is, the Case 3 in the above block S22 can be divided into Case 11, Case 12 and Case 13.

Case 11, all of third tunnels included in the third tunnel group are abnormal, and the first gateway device determines that none of the third tunnels can be used to send the data stream.

In the example of the present disclosure, in response to determining that all of the third tunnels included in the third tunnel group are abnormal, the first gateway device executes block S33, and enables the standby tunnel group (i.e., the second tunnel group), to send the first data stream to the second site through the second tunnel group. For details, please refer to the relevant description of the Case 3 in the above block S22.

In some examples, in Case 11, the above-mentioned block S22 or block S33 can be implemented by the following operations: obtaining a minimum value between a first bandwidth corresponding to one or more data streams carried in the first tunnel group and a preset bandwidth corresponding to the second tunnel group, wherein the preset bandwidth is a maximum bandwidth which is allowed to be used by a user to transmit a data stream by using the second tunnel group; in response to determining that the minimum value is less than an available bandwidth of the second tunnel group, sending the first data stream to the second site through the second tunnel group.

In the example of the present disclosure, after determining that the first tunnel group is abnormal, the first gateway device can obtain information of each first tunnel included in the first tunnel group, and calculate a total service bandwidth of the first tunnel group according to a bandwidth occupied by the service of all of the first tunnels prior all of the first tunnels are broken (that is, a bandwidth corresponding to one or more data streams carried in all of the first tunnels), wherein the calculated total service bandwidth is the first bandwidth corresponding to one or more data streams carried in the first tunnel group. Still taking the data transmission system shown in Fig. 1 as an example for explanation, in response to determining that the first gateway device is the gateway device H1, the second site is the spoke 1 site, and the first tunnel group is the tunnel group 11 corresponding to the spoke 1 site, the first bandwidth is shown in the following formula.

$$B_{tunnel1} = \sum_i B_{tunnel1_{TTE_i}}^{hub1-spoke1} \qquad \text{Formula (1)}$$

Wherein, tunnel1 represents the first tunnel group; $B_{tunnel1}$ represents the first bandwidth corresponding to one or more data streams carried in the first tunnel group; i represents a number of a first tunnel included in the first tunnel group, and the value range of i can be determined according to the number of the first tunnels, where in response to determining that the first tunnel group is the tunnel group 11, i =1, 2; *tunnel*1$_{TTE_i}$ represents a TTE tunnel numbered i (that is, the first tunnel) in the first tunnel group; hub 1 - spoke 1 represents a tunnel group between the gateway device H1 of the hub site and the gateway devices included in the spoke 1 site; $B_{tunnel1_{TTE_i}}^{hub1-spoke1}$ represents a bandwidth occupied by the service of the first tunnel numbered i prior the first tunnel numbered i is broken; $\Sigma$ is a summation symbol.

In the example of the present disclosure, the first gateway device can obtain a second bandwidth corresponding to one or more data streams carried in all of the first tunnels included in the first tunnel group within a collection period; calculate an average of second bandwidths corresponding to a preset number of collection periods to obtain the first bandwidth. The collection period is a time unit for the first gateway device to calculate the first bandwidth. Within one collection period, the first gateway device calculates a total service bandwidth of the first tunnel group within the collection period according to the bandwidth occupied by the service of all of the first tunnels prior all of the first tunnels are broken, as the second bandwidth corresponding to one or more data streams carried in the first tunnel group within the collection period. For the specific method for calculating the second bandwidth, please refer to the above formula (1). Then, the first gateway device calculates multiple second bandwidths in the same way within multiple (i.e., the preset number of) collection periods, takes an average of these multiple second bandwidths, and uses the average as the first bandwidth.

For example, after determining that the first tunnel group is abnormal, the first gateway device can take the last n (i.e., the preset number) collection periods prior all of the first tunnels are broken, calculate the second bandwidth within each of the collection periods to obtain n second bandwidths, and calculate the average of these n second bandwidths to obtain the first bandwidth. The first gateway device can also randomly select n (i.e., the preset number) collection periods from multiple collection periods prior all of the first tunnels are broken, and calculate the first bandwidth. The n can be 4, 5, etc., and there is no limitation on the value of the preset number and the way for the first gateway device to select the collection period. In the example of the present disclosure, by obtaining the multiple second bandwidths for the multiple collection periods and taking the average of the multiple second bandwidths as the total service bandwidth, the stability of the calculated first bandwidth is ensured and the accuracy of the first bandwidth is improved.

In the example of the present disclosure, a preset bandwidth can be set for the standby tunnel group, which represents a maximum bandwidth for a user to transmit a data stream by using the standby tunnel group. After determining the second tunnel group, the first gateway device can determine the preset bandwidth $B_{CIR}$ of the second tunnel group according to a Committed Information Rate (CIR) of the second tunnel group, so as to determine the maximum bandwidth for the user to transmit the data stream by using the second tunnel group. For example, the preset bandwidth $B_{CIR}$ is the CIR, or the preset bandwidth $B_{CIR}$ is a product of the CIR with a preset weight coefficient. The preset weight coefficient can be 0.8, 0.9, or 0.95, etc., and there is no limitation on this. By setting the preset bandwidth for the standby tunnel group, a speed of data stream transmission using the standby tunnel group can be limited, thereby reducing the cost due to enabling the standby tunnel group.

After determining the first bandwidth of the first tunnel group and the preset bandwidth of the second tunnel group, the first gateway device may determine the minimum value between the first bandwidth of the first tunnel group and the preset bandwidth of the second tunnel group. Taking the first bandwidth obtained in Formula (1) as an example, the first gateway device may determine the minimum value as $\min[B_{tunnel1}, B_{CIR}]$.

In the example of the present disclosure, after determining the second tunnel group, the first gateway device further needs to determine the available bandwidth of the second tunnel group, so as to determine whether the bandwidth of the second tunnel group meets a bandwidth requirement, that is, to determine whether an export bandwidth of the second WAN port on the first gateway device is sufficient.

The first gateway device can determine the available bandwidth by the following operations: obtaining a third bandwidth corresponding to one or more data streams currently carried in all tunnels included in the second tunnel group; calculating a difference value between a maximum bandwidth available for carrying one or more data streams of the second tunnel group and the third bandwidth, to obtain the available bandwidth.

The first gateway device calculates a current total service bandwidth of the second tunnel group as the third bandwidth $B_{current}$ according to a current bandwidth occupied by the service of all the second tunnels (i.e., the bandwidth corresponding to one or more data streams carried in all the second tunnels). The first gateway device calculates a product of a total bandwidth $B_{wan}$ of the second tunnel group and a preset service coefficient T to determine the maximum bandwidth that can be occupied by the service (i.e., available for carrying one or more data streams), of the second tunnel group, that is, calculates $B_{wan} \times T$ to obtain the maximum bandwidth. In different bandwidth scenarios, the preset service coefficient may be different. For example, in a large bandwidth scenario (i.e., the WAN port bandwidth is greater than 10G (Gigabit)), the value of T may be 0.9, and in a small bandwidth scenario, the value of T may be 0.8. The value of the service coefficient is not limited here.

Then, the first gateway device calculates a difference value between the maximum bandwidth and the third bandwidth, that is, calculates $B_{wan} \times T - B_{current}$, to obtain the available bandwidth. By calculating the difference value between the maximum bandwidth and the occupied third bandwidth, a more accurate available bandwidth can be obtained, and available bandwidths corresponding to different bandwidth scenarios can also be obtained, thereby improving the accuracy and credibility of the available bandwidth.

In the example of the present disclosure, the bandwidth requirement is that the minimum value between the first bandwidth of the first tunnel group and the preset bandwidth of the second tunnel group is less than the available bandwidth of the second tunnel group. The first gateway device determining whether the bandwidth of the second tunnel group meets the bandwidth requirement means determining whether the minimum value is less than the available bandwidth. Taking the first bandwidth obtained in Formula (1) as an example, the bandwidth requirement formula is as follows.

$$\mathtt{min}\left[B_{tunnel1}, B_{CIR}\right] < (B_{wan} \times T\text{-}B_{current}) \qquad \text{Formula (2)}$$

Wherein, $B_{tunnel1}$ represents the first bandwidth; $B_{CIR}$ represents the preset bandwidth of the second tunnel group; $\min[B_{tunnel1}, B_{CIR}]$ represents the minimum value between the first bandwidth and the preset bandwidth of the second tunnel group; $B_{wan}$ represents the total bandwidth of the second tunnel group; T represents the service coefficient; $B_{current}$ represents the third bandwidth; $B_{wan} \times T\text{-}B_{current}$ represents the available bandwidth of the second tunnel group.

According to Formula (2), in response to determine that the minimum value between the first bandwidth and the preset bandwidth of the second tunnel group is less than the available bandwidth of the second tunnel group, it is determined that the bandwidth of the second tunnel group meets the bandwidth requirement and the export bandwidth of the second WAN port on the first gateway device is sufficient. Then, the first gateway device can send the first data stream to the second site through the second tunnel group to reduce cases of traversing tunnels, reduce interactions among gateway devices, and improve the speed and efficiency of data stream transmission.

In some examples, in response to determine that the minimum value between the first bandwidth and the preset bandwidth of the second tunnel group is greater than or equal to the available bandwidth of the second tunnel group, the first gateway device may determine that the bandwidth of the second tunnel group fails to meet the bandwidth requirement, and the export bandwidth of the second WAN port on the first gateway device is insufficient. Then the first gateway device determines a tunnel group (such as a fourth tunnel group) established between another gateway device (such as the second gateway device) included in the first site and the gateway devices included in the second site and passing through the second WAN. The fourth tunnel group includes tunnels between the second gateway device and the gateway devices included in the second site passing through the second WAN. The fourth tunnel group is a standby tunnel group for data transmission between the first site and the second site. The fourth tunnel group is in a silent status. For ease of description, tunnels included in the fourth tunnel group will be referred to as fourth tunnels in the following.

Still taking the data transmission system shown in Fig. 1 as an example, in response to determining that the second WAN is WAN2, the first gateway device is the gateway device H1, the second gateway device is H2, and the second site is the spoke 1 site, the fourth tunnel group may include two second tunnels, namely, a tunnel between the gateway device H2 and the gateway device S11 of the spoke 1 site passing through WAN2, and a tunnel between the gateway device H2 and the gateway device S12 of the spoke 1 site passing through WAN2.

In the example of the present disclosure, the transmission network may include WANs with multiple priorities, at each of which there may be one or more WANs y. One or more WANs have the same priority. To ensure the correct transmission of a data stream, the first gateway device may determine, according to the description information of the first data stream, a fourth tunnel group that matches the communication protocol of the first data stream and has the highest priority in tunnel groups between the second gateway device and the second site that have lower priorities than the first tunnel group, and then send the first data stream to the second site through the fourth tunnel group passing through the second WAN by using the second WAN port. Here, the number of second WANs may be one or more, and the number of fourth tunnel groups may be one or more.

The first gateway device and the second gateway device can jointly send the first data stream to the second site through the second tunnel group and the fourth tunnel group. That is, the first gateway device sends the first data stream to the second site through the second tunnel group passing through the second WAN by using the second WAN port; in addition, the first gateway device sends the first data stream to the second gateway device, and the second gateway device sends the first data stream to the second site through the fourth tunnel group passing through the second WAN by using the second WAN port. The gateway devices of the second site receives the first data stream sent by the first gateway device through the second tunnel group and the fourth tunnel group.

In the example of the present disclosure, the first gateway device may send the first data stream in a load balancing manner, or may send the first data stream by a tunnel with a high link quality according to a link quality. For example, the first gateway device selects a tunnel that meets the preset link quality condition from the tunnels included in the fourth tunnel group; sends the first data stream to the second site through the tunnels included in the second tunnel group and the selected tunnel. For detail, please refer to relevant description of sending the first data stream to the second site through the first tunnel group in block S21, which will not be repeated here.

In an example of the present disclosure, the first gateway device can detect a status of each fourth tunnel included in the fourth tunnel group. In response to determine that there is a normal fourth tunnel in the fourth tunnel group, the second gateway device can send the first data stream to the second site through the normal fourth tunnel.

In response to determine that all of fourth tunnels included in the fourth tunnel group are abnormal, the first gateway device may use the current second WAN as a new first WAN and re-execute blocks S32 to S33 to ensure the real-time and reliability of data stream transmission.

In the technical solution provided by the example of the present disclosure, in response to determining that the available bandwidth of the second tunnel group fails to meet the bandwidth condition, by traversing tunnels, another gateway device included in the first site is used together with the first gateway device to transmit the data stream, and more tunnels are selected for traffic forwarding. Through multi-channel parallel transmission, the transmission speed of the first data stream is improved while meeting the bandwidth condition.

Case 12, all of the third tunnels included in the third tunnel group are normal, and the first gateway device determines that the third tunnels can be used to send the data stream.

In the example of the present disclosure, the first gateway device does not enable a standby tunnel group, but enables an active tunnel group (i.e., the third tunnel group) corresponding to the second gateway device, to send the first data stream to the second gateway device, and the second gateway device sends the first data stream to the second site through the third tunnel group passing through the first WAN by using the first WAN port. The gateway devices of the second site receives the first data stream sent by the first gateway device through the third tunnel group. In the event of an abnormality in the first tunnel group, another active tunnel group with higher priority is firstly determined, and the data stream is sent through the another active tunnel group to save network resources and reduce the cost required for transmitting the data stream.

Case 13, some of the third tunnels included in the third tunnel group are normal, and the first gateway device determines that the some of the third tunnels can be used to send the data stream. At this time, the first gateway device does not enable the standby tunnel group, and still sends the first data stream to the second gateway device. The second gateway device sends the first data stream to the second site through the normal third tunnels included in the third tunnel group by using the first WAN port.

For the method for the second gateway device to send the first data stream to the second site through the third tunnel group, please refer to the relevant description of sending the first data stream to the second site through the first tunnel group in block S21, which will not be repeated here.

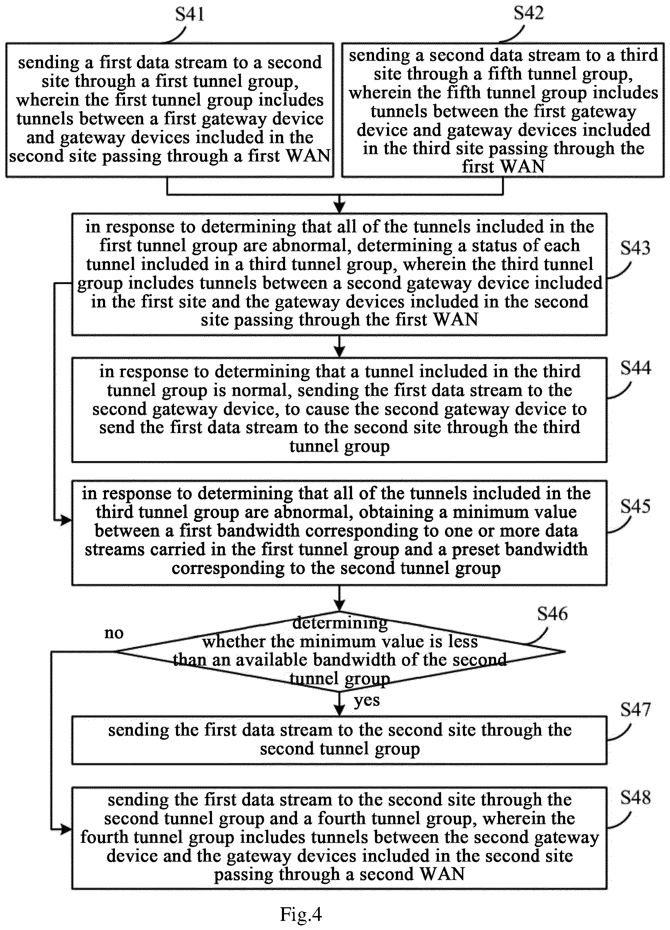

In combination with the above description, in response to determining that the first site includes multiple gateway devices, refer to Fig. 4, which is a third schematic diagram of a data transmission method provided by an example of the present disclosure. The above data transmission method may include:

Block S41, sending a first data stream to a second site through a first tunnel group, wherein the first tunnel group includes tunnels between a first gateway device and gateway devices included in the second site passing through a first WAN. This is same as the above block S21.

Block S42, sending a second data stream to a third site through a fifth tunnel group, wherein the fifth tunnel group includes tunnels between the first gateway device and gateway devices included in the third site passing through the first WAN.

Block S43, in response to determining that all of the tunnels included in the first tunnel group are abnormal, determining a status of each tunnel included in a third tunnel group, wherein the third tunnel group includes tunnels between a second gateway device included in the first site and the gateway devices included in the second site passing through the first WAN, which is the same as the above block S32. According to a status of the third tunnel group, block S44 or block S45 is executed.

Block S44, in response to determining that a tunnel included in the third tunnel group is normal, sending the first data stream to the second gateway device, to cause the second gateway device to send the first data stream to the second site through the third tunnel group.

Block S45, in response to determining that all of the tunnels included in the third tunnel group are abnormal, obtaining a minimum value between a first bandwidth corresponding to one or more data streams carried in the first tunnel group and a preset bandwidth corresponding to the second tunnel group.

Block S46, determining whether the minimum value is less than an available bandwidth of the second tunnel group, in response to determining that the minimum value is less than the available bandwidth of the second tunnel group, executing block S47; in response to determining that the minimum value is greater than or equal to the available bandwidth of the second tunnel group, executing block S48.

Block S47, sending the first data stream to the second site through the second tunnel group.

Block S48, sending the first data stream to the second site through the second tunnel group and a fourth tunnel group, wherein the fourth tunnel group includes tunnels between the second gateway device and the gateway devices included in the second site passing through a second WAN.

For the details of the above blocks S41 to S48, please refer to the relevant descriptions of the above Fig. 2 and Fig. 3. An execution order of block S42 and block S41 is not limited here.

In the technical solution provided by the example of the present disclosure, the standby tunnel group is controlled on a tunnel group basis. In response to determining that all of the tunnels included in the first tunnel group are abnormal, the first gateway device preferentially transmits the data stream through the third tunnel group (i.e., the active tunnel group). In response to determine that all active tunnel groups are abnormal, the second tunnel group (i.e., the standby tunnel group) is used to continue to transmit the data stream, thereby ensuring the stability of the service. Compared with control of a standby tunnel group through a WAN port in the related art, in the example of the present disclosure, the control granularity of the silent setting in the cold standby technology is reduced, the issue of coarse control granularity is solved, and the active tunnel group with lower cost is used as much as possible to transmit data, so as to reduce the cost of data stream transmission.

In addition, in response to determining that the available bandwidth of the second tunnel group meets the bandwidth condition, cases of traversing tunnels are reduced, interactions among gateway devices are reduced, and the speed and efficiency of data stream transmission are improved. In response to determining that the available bandwidth of the second tunnel group fails to meet the bandwidth condition, by traversing tunnels, another gateway device included in the first site is used together with the first gateway device to transmit the data stream, and more tunnels are selected for traffic forwarding. Through multi-channel parallel transmission, the transmission speed of the first data stream is improved while meeting the bandwidth condition, and more flexible data transmission is realized in a multi-gateway scenario.

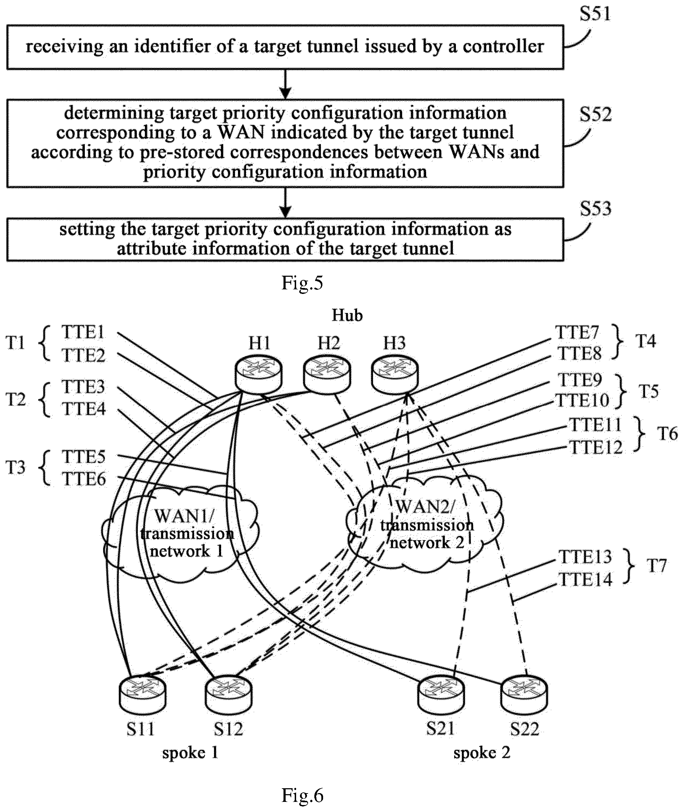

In some examples, the first gateway device may automatically configure a priority of a tunnel. Referring to Fig. 5, which is a schematic diagram of a priority configuration method provided by an example of the present disclosure, the priority configuration method may include the following blocks.

Block S51, receiving an identifier of a target tunnel issued by a controller.

Block S52, determining target priority configuration information corresponding to a WAN indicated by the target tunnel according to pre-stored correspondences between WANs and priority configuration information.

Block S53, setting the target priority configuration information as attribute information of the target tunnel.

In the technical solution provided by the example of the present disclosure, unified configuration and deployment are performed based on the controller. It only needs to determine correspondences between WANs and priorities, and determine a WAN passed through by the target tunnel according to the target tunnel, so as to configure a priority for the target tunnel, and add the target tunnel to a cold standby strategy without configuring each tunnel one by one. This improves the configuration efficiency of the cold standby strategy and facilitates subsequent maintenance.

In the above block S51, the controller can be an electronic device such as a computer or a server, and can also be a software defined network (SDN) controller, etc., and the following description will be made using the SDN controller as an example. The target tunnel is a tunnel that needs to be configured with a priority, that is, a tunnel that needs to be added to a cold standby strategy. An identifier (ID) of a tunnel is used to distinguish different tunnels, and may include a site ID, a gateway device (Dev) ID, an interface (If) ID (i.e., a WAN port ID), and a management Internet Protocol (IP) address (i.e., a system (Sys) IP address), etc. Content included in the tunnel identifier is not limited here. The first gateway device receives the identifier of the target tunnel issued by the SDN controller, and determines the target tunnel that needs to be configured with the priority from all the established tunnels.

In the above block S52, the priority configuration information includes a priority of a WAN and an active-standby strategy of a tunnel passing through the WAN. In the example of the present disclosure, the priority of the WAN can be represented by a numerical value, for example, the priority can be represented as 20, 30, etc., where the larger the numerical value is, the higher the priority is; the priority of the WAN can be represented by words such as high and low, which is not limited. The active-standby strategy indicates that the tunnel is an active tunnel or a standby tunnel. The content included in the priority configuration information is not limited here.

The WAN indicated by the target tunnel is a WAN through which the target tunnel passes. Taking the priority configuration information including the priority of the WAN and the active-standby strategy of the tunnel passing through the WAN as an example, the target priority configuration information includes the priority of the WAN through which the target tunnel passes (that is, the priority of the target tunnel) and the active-standby strategy of the target tunnel (that is, whether the target tunnel is the active tunnel or the standby tunnel).

The first gateway device determines the target tunnel according to the identifier of the target tunnel, and then determines a WAN through which the target tunnel passes as the WAN indicated by the target tunnel. The first gateway device searches for the preset stored correspondences between WANs and priority configuration information to obtain a correspondence including the WAN indicated by the target tunnel, and uses priority configuration information included in the obtained correspondence as the target priority configuration information.

Then, the first gateway device executes block S53 to set the target priority configuration information as the attribute information of the target tunnel, that is, to set the priority and active-standby strategy of the target tunnel as the attribute information of the target tunnel. In implementing a standby strategy (cold standby strategy) subsequently according to a priority, the first gateway device can determine a priority and an active-standby strategy of each tunnel according to the attribute information of the tunnel, to implement tunnel selection.

In the example of the present disclosure, the first gateway device may, during the process of establishing a tunnel, determine the priority of the tunnel and set the attribute information for the tunnel according to the indicated WAN through the above blocks S51 to S53; the first gateway device may also execute the above blocks S51 to S53 after the tunnel is established, to determine the priority of the tunnel according to the indicated WAN, add the target tunnel to the active-standby strategy, and set the attribute information for the tunnel, without limitation.

In the example of the present disclosure, the priority configuration information may also include outbound rate limit information and inbound rate limit information of a tunnel passing through a WAN. The outbound rate limit information may include an outbound CIR, etc., and the inbound rate limit information may include an inbound CIR, etc. The contents of the outbound rate limit information and the inbound rate limit information are not limited here.

In this case, the target priority configuration information includes the priority, the active-standby strategy, the outbound rate limit information, and the inbound rate limit information of the target tunnel, and then the first gateway device can set the priority, the active-standby strategy, the outbound rate limit information, and the inbound rate limit information of the target tunnel as the attribute information of the target tunnel. Further, the first gateway device can determine the priority, active-standby strategy, and preset bandwidth of the tunnel according to the attribute information.

In the example of the present disclosure, the first gateway device can design a configuration command template, and fill in the configuration command template according to the identifier of the target tunnel and the target priority configuration information, to obtain a configuration command corresponding to the target tunnel, and set the attribute information of the target tunnel according to the configuration command.

Taking the priority configuration information including a priority of a WAN, an active-standby strategy of a tunnel passing through the WAN, the outbound rate limit information, and the inbound rate limit information as an example, the configuration command template may include the following fields: a target tunnel identifier field, an active-standby strategy field, a priority field, an inbound rate limit field and an outbound rate limit field. The fields included in the configuration command template are not limited here.

The target tunnel identifier field includes a field name (represented as tte-policy destination) and field content, where the field content is used to fill in the identifier of the target tunnel issued by the controller. Taking the identifier of the target tunnel including the site ID (i.e., SiteID), the gateway device ID (i.e., DevID), the interface ID (i.e., IfID) and the system IP address (i.e., SysIP) as an example, the field content is represented as SiteID/DevID/IfID/SysIP.

The active-standby strategy field is used to represent the active-standby strategy of the target tunnel indicated by the target tunnel identifier field, that is, whether the target tunnel is an active tunnel (active) or a standby tunnel (standby). The active-standby strategy field is represented as {active|standby}.

The priority field includes a field name (represented as Priority) and field content, where the field content is used to fill in the priority of the target tunnel indicated by the target tunnel identifier field. In the example of the present disclosure, the priority is based on the cost, and the field content is represented as cost.

The inbound rate limit field includes a field name (represented as lr-inbound cir) and field content (represented as CIR). Taking the inbound rate limit information as the inbound CIR as an example, the field content is used to fill in the inbound CIR of the target tunnel indicated by the target tunnel identifier field.

The outbound rate limit field includes a field name (represented as lr-outbound cir) and field content (represented as CIR). Taking the outbound rate limit information as the outbound CIR as an example, the field content is used to fill in the outbound CIR of the target tunnel indicated by the target tunnel identifier field.

Based on the above description, it can be determined that the configuration command template is: tte-policy destination SiteID/DevID/IfID/SysIP {active|standby} Priority cost lr-inbound cir CIR lr-outbound cir CIR.

After determining the target priority configuration information, the first gateway device fills the identifier, the priority, the inbound CIR, and the outbound CIR of the target tunnel included in the target priority configuration information into the field content of the target tunnel identifier field, the field content of the priority field, the field content of the inbound rate limit field, and the field content of the outbound rate limit field, respectively, and determines the active-standby strategy field (that is, determines whether the active-standby strategy field is active or standby) according to the active-standby strategy included in the target priority configuration information, and generates a configuration command corresponding to the target tunnel.

For example, in response to determining that the site ID, the gateway device ID, the interface ID, and the system IP address included in the identifier of the target tunnel are 2, 1, 3, and 10.10.10.2 respectively, the target tunnel is a standby tunnel, the priority is 20, and the inbound CIR and outbound CIR are both 1000, the first gateway device generates the configuration command corresponding to the target tunnel: tte-policy destination 2/1/3/10.10.10.2 standby Priority 20 lr-inbound cir 1000 lr-outbound cir 1000.

The first gateway device determines the target tunnel according to the identifier of the target tunnel in the generated configuration command, and configures the attribute information of the target tunnel according to the active-standby strategy field, the priority field, the inbound rate limit field, and the outbound rate limit field.

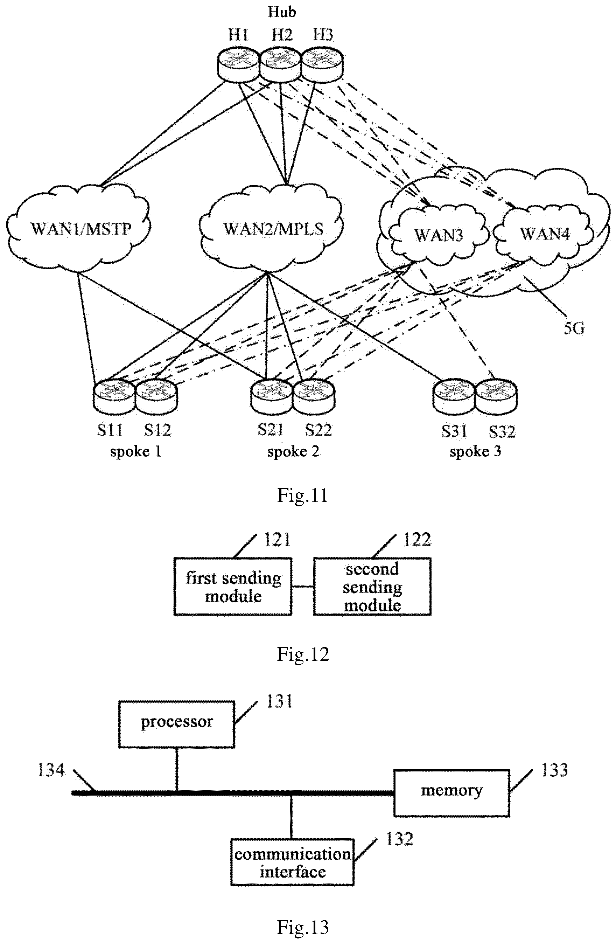

The data transmission method provided by the example of the present disclosure is described in detail below through the data transmission scenarios shown in Fig. 6 to Fig. 10, and the data transmission system shown in Fig. 11.

Fig. 6 is a first schematic diagram of a data transmission scenario provided by an example of the present disclosure. In this data transmission scenario, one hub site and two spoke sites (i.e., spoke 1 site and spoke 2 site) are included. The hub site includes three gateway devices, namely, a gateway device H1, a gateway device H2, and a gateway device H3. The spoke 1 site includes two gateway devices, namely, a gateway device S11 and a gateway device S12. The spoke 2 site includes two gateway devices, namely, a gateway device S21 and a gateway device S22.

In the data transmission scenario shown in Fig. 6, the transmission network 1 includes one WAN (i.e., WAN1), and the transmission network 2 includes one WAN (i.e., WAN2), and the priority of WAN1 is larger than the priority of WAN2. For the hub site, the above system includes 7 tunnel groups, namely T1~T7.

T1 is a tunnel group between the gateway device H1 and the spoke 1 site passing through WAN1, including a tunnel TTE1 between the gateway device H1 and the gateway device S11 and a tunnel TTE2 between the gateway device H1 and the gateway device S12.

T2 is a tunnel group between the gateway device H2 and the spoke 1 site passing through WAN1, including a tunnel TTE3 between the gateway device H2 and the gateway device S11 and a tunnel TTE4 between the gateway device H2 and the gateway device S12.

T3 is a tunnel group between the gateway device H1 and the spoke 2 site passing through WAN1, including a tunnel TTE5 between the gateway device H1 and the gateway device S21 and a tunnel TTE6 between the gateway device H1 and the gateway device S22.

T4 is a tunnel group between the gateway device H1 and the spoke 1 site passing through WAN2, including a tunnel TTE7 between the gateway device H1 and the gateway device S11 and a tunnel TTE8 between the gateway device H1 and the gateway device S12.

T5 is a tunnel group between the gateway device H2 and the spoke 1 site passing through WAN2, including a tunnel TTE9 between the gateway device H2 and the gateway device S11 and a tunnel TTE10 between the gateway device H2 and the gateway device S12.

T6 is a tunnel group between the gateway device H3 and the spoke 1 site passing through WAN2, including a tunnel TTE11 between the gateway device H3 and the gateway device S11 and a tunnel TTE12 between the gateway device H3 and the gateway device S12.

T7 is a tunnel group between the gateway device H3 and the spoke 2 site passing through WAN2, including a tunnel TTE13 between the gateway device H3 and the gateway device S21 and a tunnel TTE14 between the gateway device H3 and the gateway device S22.

In this network, the tunnel groups (i.e., T1, T2, and T3) passing through WAN1 are active tunnel groups and are in an enabled state; the tunnel groups (i.e., T4, T5, T6, and T7) passing through WAN2 are standby tunnel groups and are in a silent status. In other words, WAN1 is the first WAN and WAN2 is the second WAN.

During downlink data transmission, the gateway device H1 of the hub site receiving the data stream from the LAN side is taken as an example. The gateway device H1 (i.e., the first gateway device) of the hub site (i.e., the first site) receives a data stream 1 (i.e., the first data stream) and a data stream 2 (i.e., the second data stream) from the LAN side through the LAN port of the gateway device H1 itself, and a destination site of the data stream 1 is the spoke 1 site (i.e., the second site), and a destination site of the data stream 2 is the spoke 2 site (i.e., the third site).

The gateway device H1 sends the data stream 1 to gateway devices S11 and S12 included in spoke 1 site through the TTE1 tunnel and TTE2 tunnel included in the T1 tunnel group (i.e., the first tunnel group) in a load balancing manner. The gateway device H1 sends the data stream 2 to gateway devices S21 and S22 included in spoke 2 site through the TTE5 tunnel and TTE6 tunnel included in the T3 tunnel group (i.e., the fifth tunnel group) in a load balancing manner.

The gateway device H1 sending the data stream 1 to the spoke 1 site is taken as example. During sending the data stream 1, the gateway device H1 collects information of the TTE1 tunnel and the TTE2 tunnel through iNQA to determine whether the TTE1 tunnel and the TTE2 tunnel are broken (that is, whether the TTE1 tunnel and the TTE2 tunnel are abnormal).

In response to determining that one of the TTE1 tunnel and the TTE2 tunnel is determined to be broken by the gateway device H1, taking the TTE1 tunnel being broken as an example, the gateway device H1 sends the data stream 1 to the gateway device S12 of the spoke 1 site through the TTE2 tunnel.

In response to determining that both of the TTE1 tunnel and the TTE2 tunnel are determined to be broken by the gateway device H1, the gateway device H1 determines active tunnel groups between other gateway devices (such as the gateway device H2 and the gateway device H3) included in the hub site and the spoke 1 site, such as the T2 tunnel group (i.e., the third tunnel group) corresponding to the gateway device H2. The gateway device H1 sends the data stream 1 to the gateway device H2, and the gateway device H2 sends the data stream 1 to the gateway devices S11 and S12 included in the poke 1 site through the TTE3 tunnel and the TTE4 tunnel included in the T2 tunnel group in a load balancing manner.

At this time, since the function of the WAN port corresponding to WAN1 on the gateway device H1 is normal and the traffic of the T3 tunnel group is also normal (that is, the T3 tunnel group can transmit the data stream normally), the gateway device H1 can continue to send the data stream 2 to the spoke 2 site through the T3 tunnel group without enabling the T7 tunnel group.

In response to determining that all of the tunnels included in the T2 tunnel group are determined to be broken by the gateway device H1, the gateway device H1 determines whether the bandwidth of the T4 tunnel group (standby tunnel group) established by the gateway device H1 itself meets the bandwidth requirement. In response to determining that the bandwidth of the T4 tunnel group meets the bandwidth requirement, the gateway device H1 enables the T4 tunnel group (i.e., the second tunnel group). The gateway device H1 sends the data stream 1 to the gateway devices S11 and S12 of the spoke 1 site through the TTE7 tunnel and the TTE8 tunnel included in the T4 tunnel group in a load balancing manner.

In response to determining that the bandwidth of the T4 tunnel group fails to meet the bandwidth requirement, the gateway device H1 determines standby tunnel groups between other gateway devices (such as the gateway device H2 and the gateway device H3) included in the hub site and the spoke 1 site, such as the T5 tunnel group and the T6 tunnel group (i.e., the fourth tunnel group).

The gateway device H1 determines tunnels that meet the preset link quality condition, such as TTE9 and TTE11, from the T5 tunnel group and the T6 tunnel group. The gateway device H1 sends the data stream 1 to the gateway devices S11 and S12 of the spoke 1 site in a load balancing manner through the TTE7, TTE8, TTE9 and TTE11 tunnels.

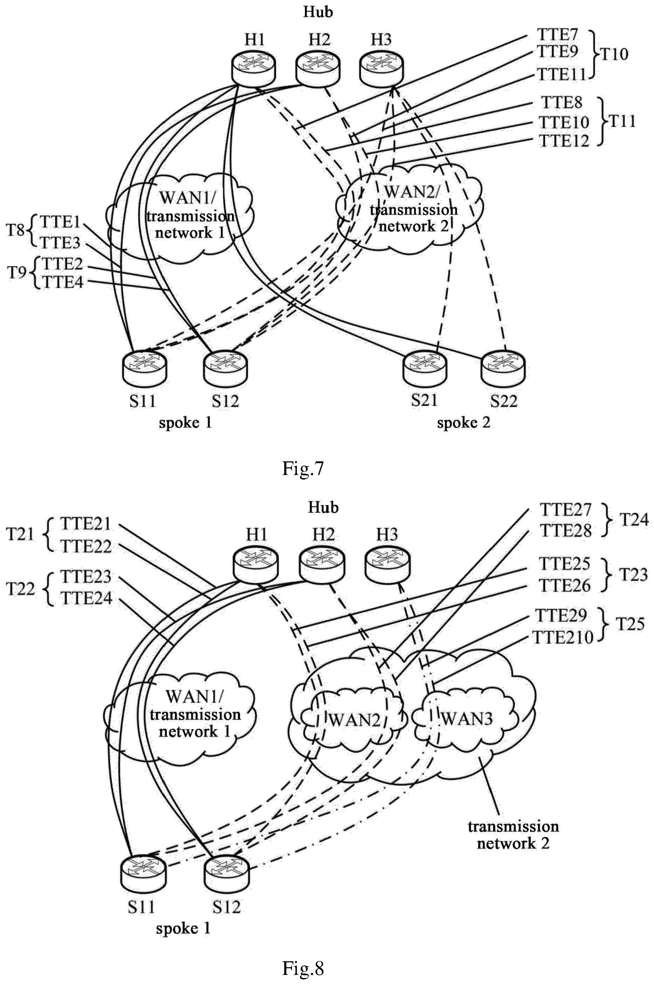

Fig. 7 is a second schematic diagram of a data transmission scenario provided by an example of the present disclosure. Based on the data transmission scenario shown in Fig. 6, for the spoke 1 site, the above system includes 4 tunnel groups, namely T8~T11.

T8 is a tunnel group between the gateway device S11 and the hub site passing through WAN1, including TTE1 and TTE3.

T9 is a tunnel group between the gateway device S12 and the hub site passing through WAN1, including TTE2 and TTE4.

T10 is a tunnel group between the gateway device S11 and the hub site passing through WAN2, including TTE7, TTE9 and TTE11.

T11 is a tunnel group between the gateway device S12 and the hub site passing through WAN2, including TTE8, TTE10 and TTE12.

In this network, the tunnel groups (i.e., T8 and T9) passing through WAN1 are active tunnel groups and are in an enabled state; the tunnel groups (i.e., T10 and T11) passing through WAN2 are standby tunnel groups and are in a silent status. In other words, WAN1 is the first WAN and WAN2 is the second WAN.

During uplink data transmission, the gateway device S11 of the spoke 1 site sending the data stream to the hub site is taken as an example. The gateway device S11 (i.e., the first gateway device) of the spoke 1 site (i.e., the first site) receives a data stream 3 (i.e., the first data stream) from the LAN side through the LAN port of the gateway device S11 itself, and a destination site of the data stream 3 is the hub site.

The gateway device S11 sends the data stream 3 to the gateway devices H1 and H2 of the hub site (i.e., the second site) through the TTE1 tunnel and the TTE3 tunnel included in the tunnel group T8 (i.e., the first tunnel group) in a load balancing manner.

During sending the data stream 3, the gateway device S11 collects information of the T8 tunnel group through iNQA to determine whether the TTE1 tunnel and TTE3 tunnel are broken (i.e., whether the TTE1 tunnel and TTE3 tunnel are abnormal).

In response to determining that one of the TTE1 tunnel and the TTE3 tunnel is determined to be broken by the gateway device S11, taking the TTE1 tunnel being broken as an example, the gateway device S11 sends the data stream 3 to the gateway device H2 of the hub site through the TTE3 tunnel.

In response to determining that both of the TTE1 tunnel and the TTE3 tunnel are determined to be broken by the gateway device S11, the gateway device S11 determines active tunnel groups between other gateway devices (such as the gateway device S12) included in the spoke 1 site and the hub site, such as the T9 tunnel group (i.e., the third tunnel group) corresponding to the gateway device S12. The gateway device S11 sends the data stream 3 to the gateway device S12, and the gateway device S12 sends the data stream 3 to the gateway devices H1 and H2 of the hub site through the TTE2 tunnel and the TTE4 tunnel included in the T9 tunnel group in a load balancing manner.

In response to determining that all of the tunnels included in the T9 tunnel group are determined to be broken by the gateway device S11, that is, all of the active tunnel groups (that is, the T8 tunnel group and the T9 tunnel group) that are used to transmit the data stream to the hub site are determined to be broken by the gateway device S11, the gateway device S11 determines whether the bandwidth of the T10 tunnel group (the standby tunnel group) established by the gateway device S11 itself meets the bandwidth requirement.

In response to determining that the bandwidth of the T10 tunnel group meets the bandwidth requirement, the gateway device S11 enables the T10 tunnel group (i.e., the second tunnel group). The gateway device S11 sends the data stream 3 to the gateway devices H1 to H3 of the hub site through the TTE7 tunnel, TTE9 tunnel, and TTE11 tunnel included in the T10 tunnel group in a load balancing manner.

In response to determining that the bandwidth of the T10 tunnel group fails to meet the bandwidth requirement, the gateway device S11 determines standby tunnel groups between other gateway devices (such as the gateway device S12) included in the spoke 1 site and the hub site, such as the T11 tunnel group (i.e., the fourth tunnel group).

The gateway device S11 determines tunnels that meet the preset link quality condition, such as TTE10 and TTE12, from the T11 tunnel group, and sends the data stream 3 to the gateway devices H1 to H3 of the hub site through the TTE7, TTE9, TTE10, TTE11 and TTE12 tunnels.

For ease of description, Fig. 8 to Fig. 10 all take the data stream transmission between the hub site and the spoke 1 site as an example for description. The spoke 2 site and the tunnels between the spoke 2 site and the hub site are omitted in the data transmission scenarios shown in Fig 8 to Fig 10.

Fig. 8 is a third schematic diagram of a data transmission scenario provided by an example of the present disclosure. In the data transmission scenario shown in Fig. 8, the transmission network 1 includes one WAN (i.e., WAN1), and the transmission network 2 includes two WANs (i.e., WAN2 and WAN3), and the priority of WAN1 is larger than the priority of WAN2, and the priority of WAN2 is larger than the priority of WAN3.

For the hub site, the above system includes five tunnel groups, namely T21~T25.

T21 is a tunnel group between the gateway device H1 and the spoke 1 site passing through WAN1, including a tunnel TTE21 between the gateway device H1 and the gateway device S11 and a tunnel TTE22 between the gateway device H1 and the gateway device S12.

T22 is a tunnel group between the gateway device H2 and the spoke 1 site passing through WAN1, including a tunnel TTE23 between the gateway device H2 and the gateway device S11 and a tunnel TTE24 between the gateway device H2 and the gateway device S12.

T23 is a tunnel group between the gateway device H1 and the spoke 1 site passing through WAN2, including a tunnel TTE25 between the gateway device H1 and the gateway device S11 and a tunnel TTE26 between the gateway device H1 and the gateway device S12.

T24 is a tunnel group between the gateway device H2 and the spoke 1 site passing through WAN2, including a tunnel TTE27 between the gateway device H2 and the gateway device S11 and a tunnel TTE28 between the gateway device H2 and the gateway device S12.

T25 is a tunnel group between the gateway device H3 and the spoke 1 site passing through WAN3, including a tunnel TTE29 between the gateway device H3 and the gateway device S11 and a tunnel TTE210 between the gateway device H3 and the gateway device S12.

In this network, the tunnel groups (i.e., T21 and T22) passing through WAN1 are active tunnel groups and are in an enabled state; the tunnel groups (i.e., T23, T24, and T25) passing through WAN2 and WAN3 are standby tunnel groups and are in a silent status. In an initial state, WAN1 is the first WAN and WAN2 is the second WAN.

During downlink data transmission, the gateway device H1 of the hub site receiving the data stream from the LAN side is taken as an example. The gateway device H1 (i.e., the first gateway device) of the hub site (i.e., the first site) receives a data stream 4 from the LAN side through the LAN port of the gateway device H1 itself, and a destination site of the data stream 4 is the spoke 1 site (i.e., the second site). The gateway device H1 sends the data stream 4 to the gateway devices S11 and S12 included in the spoke 1 site through the TTE21 tunnel and the TTE22 tunnel included in the T21 tunnel group (i.e., the first tunnel group) in a load balancing manner.

In response to determining that all of the tunnels included in the tunnel groups T21 and T22 are determined to be broken by the gateway device H1, then in response to determining that the bandwidth of the tunnel group T23 fails to meet the bandwidth requirement, the gateway device H1 determines an available standby tunnel group with the highest priority between other gateway devices (such as the gateway device H2 and the gateway device H3) included in the hub site and the spoke 1 site, such as the T24 tunnel group (i.e., the fourth tunnel group).

The gateway device H1 determines a tunnel that meets the preset link quality condition, such as TTE27, from the T24 tunnel group. The gateway device H1 sends the data stream 4 to the gateway devices S11 and S12 of the spoke 1 site through the TTE25 tunnel, the TTE26 tunnel and the TTE27 tunnel in a load balancing manner.

Then, the gateway device H1 can re-execute data transmission by using WAN2 as a new first WAN and using WAN3 as a new second WAN. For example, in response to determining that all of the tunnels included in the T23 and T24 tunnel groups are broken, the gateway device H1 determines an available standby tunnel group with the highest priority between other gateway devices (such as the gateway device H2 and the gateway device H3) included in the hub site and the spoke 1 site, such as a T25 tunnel group. The gateway device H1 sends the data stream 4 to the gateway device S11 and the gateway device S12 of the spoke 1 site through the TTE29 and TTE210 tunnels included in the T25 tunnel group in a load balancing manner.

In response to determining that the T21 and T22 tunnel groups are determined to have restored to normal by the gateway device H1, such as in response to determining that all or some of the tunnels included in the T21 and T22 tunnel groups have restored to normal, the gateway device H1 can re-execute data transmission by using WAN1 as a new first WAN and using WAN2 as a new second WAN.

The description of Fig. 8 is relatively simple, and reference can be made to the relevant description of Fig. 6 for details. In addition, in the data transmission scenario shown in Fig. 8, the uplink data transmission process is similar to the downlink data transmission process, and will not be described here.

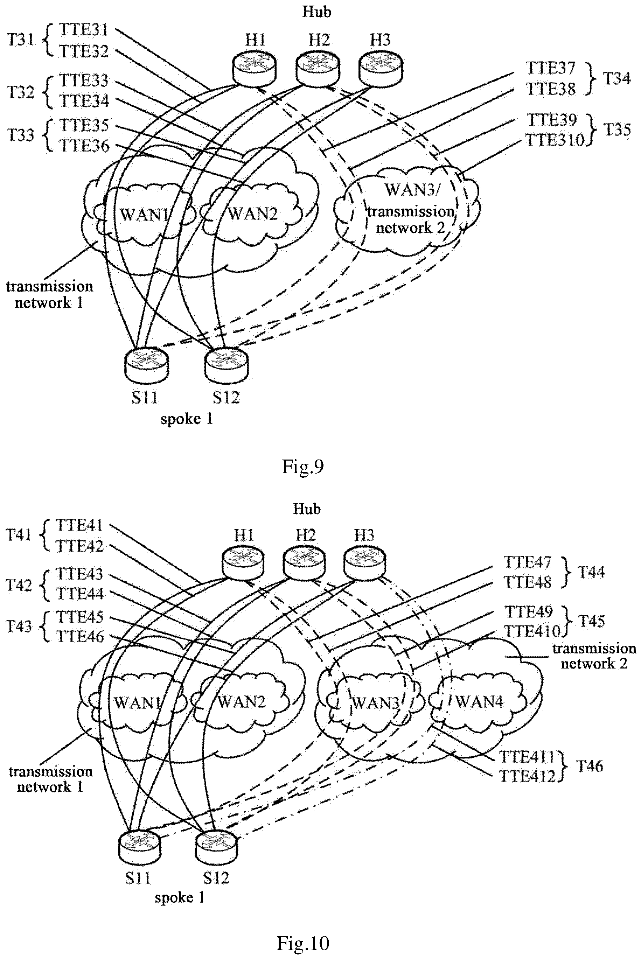

Fig. 9 is a fourth schematic diagram of a data transmission scenario provided by an example of the present disclosure. In the data transmission scenario shown in Fig. 9, the transmission network 1 includes two WANs (i.e., WAN1 and WAN2), the transmission network 2 includes one WAN (i.e., WAN3), and the priority of WAN1 is equal to the priority of WAN2, and is larger than the priority of WAN3.

For the hub site, the above system includes five tunnel groups, namely T31~T35.

T31 is a tunnel group between the gateway device H1 and the spoke 1 site passing through WAN1, including a tunnel TTE31 between the gateway device H1 and the gateway device S11 and a tunnel TTE32 between the gateway device H1 and the gateway device S12.

T32 is a tunnel group between the gateway device H2 and the spoke 1 site passing through WAN1, including a tunnel TTE33 between the gateway device H2 and the gateway device S11 and a tunnel TTE34 between the gateway device H2 and the gateway device S12.

T33 is a tunnel group between the gateway device H3 and the spoke 1 site passing through WAN2, including a tunnel TTE35 between the gateway device H3 and the gateway device S11 and a tunnel TTE36 between the gateway device H3 and the gateway device S12.

T34 is a tunnel group between the gateway device H1 and the spoke 1 site passing through WAN3, including a tunnel TTE37 between the gateway device H1 and the gateway device S11 and a tunnel TTE38 between the gateway device H1 and the gateway device S12.

T35 is a tunnel group between the gateway device H2 and the spoke 1 site passing through WAN3, including a tunnel TTE39 between the gateway device H2 and the gateway device S11 and a tunnel TTE310 between the gateway device H2 and the gateway device S12.

In this network, the tunnel groups (i.e., T31, T32, and T33) passing through WAN1 and WAN2 are active tunnel groups and are in an enabled state; the tunnel groups (i.e., T34 and T35) passing through WAN3 are standby tunnel groups and are in a silent status. In other words, WAN1 and WAN2 are the first WANs, and WAN3 is the second WAN.

During downlink data transmission, the gateway device H1 of the hub site receiving the data stream form the LAN side is taken as an example. The gateway device H1 (i.e., the first gateway device) of the hub site (i.e., the first site) receives a data stream 5 (i.e., the first data stream) from the LAN side through the LAN port of the gateway device H1 itself, and a destination site of the data stream 5 is the spoke 1 site (i.e., the second site). The gateway device H1 sends the data stream 5 to the gateway devices S11 and S12 included in the spoke 1 site through the TTE31 tunnel and TTE32 tunnel included in the T31 tunnel group (i.e., the first tunnel group) in a load balancing manner.

In response to determining that both of the TTE31 tunnel and the TTE32 tunnel are determined to be broken by the gateway device H1, the gateway device H1 determines active tunnel groups between other gateway devices (such as the gateway device H2 and the gateway device H3) included in the hub site and the spoke 1 site, such as the T32 tunnel group (i.e., the third tunnel group) corresponding to the gateway device H2 and the T33 tunnel group (i.e., the third tunnel group) corresponding to the gateway device H3. The gateway device H1 sends the data stream 5 to the gateway devices H2 and H3 in a load balancing manner. The gateway device H2 sends the data stream 5 to the gateway devices S11 and S12 included in the spoke 1 site through the TTE33 tunnel and the TTE34 tunnel included in the T32 tunnel group in a load balancing manner. The gateway device H3 sends the data stream 5 to the gateway devices S11 and S12 included in the spoke 1 site through the TTE35 tunnel and the TTE36 tunnel included in the T33 tunnel group in a load balancing manner.

In response to determining that all of the tunnels included in the T32 and T33 tunnel groups are determined to be broken by the gateway device H1, the gateway device H1 starts to enable the standby tunnel group.

The description of Fig. 9 is relatively simple, and reference can be made to the relevant description of Fig. 6 for details. In addition, in the data transmission scenario shown in Fig. 9, the uplink data transmission process is similar to the downlink data transmission process, and will not be described here.

In the data transmission scenario shown in Fig. 9, the priority of WAN1 may also be greater than that of WAN2. The tunnel groups (i.e., T31 and T32) passing through WAN1 are active tunnel groups and are in an enabled state; the tunnel groups (i.e., T33, T34, and T35) passing through WAN2 and WAN3 are standby tunnel groups and are in a silent status. The corresponding data transmission process is similar to the data transmission process in Fig. 6 and Fig. 8, and will not be repeated here.

Fig. 10 is a fifth schematic diagram of a data transmission scenario provided by an example of the present disclosure. In the data transmission scenario shown in Fig. 10, the transmission network 1 includes two WANs (i.e., WAN1 and WAN2), and the transmission network 2 includes two WANs (i.e., WAN3 and WAN4), and the priority of WAN1 is equal to the priority of WAN2, the priority of WAN2 is larger than the priority of WAN3, and the priority of WAN3 is larger than the priority of WAN4.

For the hub site, the above system includes six tunnel groups, namely T41~T46.

T41 is a tunnel group between the gateway device H1 and the spoke 1 site passing through WAN1, including a tunnel TTE41 between the gateway device H1 and the gateway device S11 and a tunnel TTE42 between the gateway device H1 and the gateway device S12.

T42 is a tunnel group between the gateway device H2 and the spoke 1 site passing through WAN1, including a tunnel TTE43 between the gateway device H2 and the gateway device S11 and a tunnel TTE44 between the gateway device H2 and the gateway device S12.

T43 is a tunnel group between the gateway device H3 and the spoke 1 site passing through WAN2, including a tunnel TTE45 between the gateway device H3 and the gateway device S11 and a tunnel TTE46 between the gateway device H3 and the gateway device S12.

T44 is a tunnel group between the gateway device H1 and the spoke 1 site passing through the WAN3, including a tunnel TTE47 between the gateway device H1 and the gateway device S11 and a tunnel TTE48 between the gateway device H1 and the gateway device S12.

T45 is a tunnel group between the gateway device H2 and the spoke 1 site passing through WAN3, including a tunnel TTE49 between the gateway device H2 and the gateway device S11 and a tunnel TTE410 between the gateway device H2 and the gateway device S12.

T46 is a tunnel group between the gateway device H3 and the spoke 1 site passing through WAN4, including a tunnel TTE411 between the gateway device H3 and the gateway device S11 and a tunnel TTE412 between the gateway device H3 and the gateway device S12.

In this network, the tunnel groups (i.e., T41, T42, and T43) passing through WAN1 and WAN2 are active tunnel groups and are in an enabled state; the tunnel groups (i.e., T44, T45, and T46) passing through WAN3 and WAN4 are standby tunnel groups and are in a silent status. In an initial state, WAN1 and WAN2 are the first WANs, and WAN3 is the second WAN.

During downlink data transmission, the gateway device H1 of the hub site receiving the data stream from the LAN side is taken as an example. The gateway device H1 (i.e., the first gateway device) of the hub site (i.e., the first site) receives a data stream 6 (i.e., the first data stream) from the LAN side through the LAN port of the gateway device H1 itself, and a destination site of the data stream 6 is the spoke 1 site (i.e., the second site). The gateway device H1 sends the data stream 6 to the gateway devices S11 and S12 included in the spoke 1 site through the TTE41 tunnel and TTE42 tunnel included in the T41 tunnel group (i.e., the first tunnel group) in a load balancing manner.

In response to determining that both of the TTE41 tunnel and the TTE42 tunnel are determined to be broken by the gateway device H1, the gateway device H1 determines active tunnel groups between other gateway devices (such as the gateway device H2 and the gateway device H3) included in the hub site and the spoke 1 site, such as the T42 tunnel group (i.e., the third tunnel group) corresponding to the gateway device H2 and the T43 tunnel group (i.e., the third tunnel group) corresponding to the gateway device H3. The gateway device H1 sends the data stream 6 to the gateway devices H2 and H3 in a load balancing manner. The gateway device H2 sends the data stream 6 to the gateway devices S11 and S12 included in the spoke 1 site through the TTE43 tunnel and the TTE44 tunnel included in the T42 tunnel group in a load balancing manner; the gateway device H3 sends the data stream 6 to the gateway devices S11 and S12 included in the spoke 1 site through the TTE45 tunnel and the TTE46 tunnel included in the T43 tunnel group in a load balancing manner.

In response to determining that all of the tunnels included in the T42 and T43 tunnel groups are determined to be broken by the gateway device H1, then in response to determining that the bandwidth of the T44 tunnel group fails to meet the bandwidth requirement, the gateway device H1 determines an available standby tunnel group with the highest priority between other gateway devices (such as the gateway device H2 and the gateway device H3) included in the hub site and the spoke 1 site, such as the T45 tunnel group (i.e., the fourth tunnel group).

The gateway device H1 determines a tunnel that meets the preset link quality condition, such as TTE49, from the T45 tunnel group, and the gateway device H1 sends the data stream 6 to the gateway devices S11 and S12 of the spoke 1 site through the TTE47 tunnel, the TTE48 tunnel and the TTE49 tunnel in a load balancing manner.

Then, the gateway device H1 can re-execute data transmission by using WAN3 as a new first WAN and using WAN4 as a new second WAN. For example, In response to determining that all of the tunnels included in the T44 and T45 tunnel groups are broken, the gateway device H1 determines an available standby tunnel group with the highest priority between other gateway devices (such as the gateway device H2 and the gateway device H3) included in the hub site and the spoke 1 site, such as the T46 tunnel group. The gateway device H1 sends the data stream 6 to the gateway devices S11 and S12 of the spoke 1 site through the TTE411 and TTE412 tunnels included in the T46 tunnel group in a load balancing manner.

In response to determining that the T41, T42 and T43 tunnel groups are determined to have restored to normal by the gateway device H1, such as in response to determining that all or some of the tunnels included in the T41, T42 and T43 tunnel groups have restored to normal, the gateway device H1 can re-execute data transmission by using WAN1 and WAN2 as new first WANs and using WAN3 as a new second WAN.

The description of Fig. 10 is relatively simple, and reference can be made to the relevant description of Fig. 6 to Fig. 9 for details. In addition, in the data transmission scenario shown in Fig. 10, the uplink data transmission process is similar to the downlink data transmission process, and will not be described here.

In the data transmission scenario shown in Fig. 10, the priority of WAN1 can also be greater than that of WAN2. The tunnel groups (i.e., T41 and T42) passing through WAN1 are active tunnel groups and are in an enabled state; the tunnel groups (i.e., T43 to T46) passing through WAN2, WAN3, and WAN4 are standby tunnel groups and are in a silent status. The corresponding data transmission process is similar to the data transmission process in Fig. 6, and will not be repeated here.

In Fig. 6 to Fig. 10, the communication protocol used by each WAN (i.e., the communication protocol of the data stream transmitted by the tunnel group) matching the transmitted data stream are taken as example for description. In actual applications, there may be a case where the communication protocols used by some WANs do not match the transmitted data streams. In this case, in data stream transmission, the WANs that do not match the communication protocols of the data streams may not be considered.

For example, in Fig. 9, the gateway device H1 of the hub site receives a data stream 7 from the LAN side through the LAN port of the gateway device H1 itself, and a destination site of the data stream 7 is the spoke 1 site. The communication protocol of the data stream 7 does not match the communication protocol used by WAN2.

The gateway device sends the data stream 7 to the gateway devices S11 and S12 included in the spoke 1 site through the TTE31 tunnel and the TTE32 tunnel included in the T31 tunnel group in a load balancing manner.

In response to determining that both of the TTE31 tunnel and the TTE32 tunnel are determined to be broken by the gateway device H1, the gateway device H1 determines active tunnel groups between other gateway devices (such as the gateway devices H2 and the gateway devices H3) included in the hub site and the spoke 1 site, such as the T32 tunnel group (i.e., the third tunnel group) corresponding to the gateway device H2 and the T33 tunnel group (i.e., the third tunnel group) corresponding to the gateway device H3. Since the communication protocol used by WAN2 through which the T33 tunnel group passes does not match the communication protocol of the data stream 7, that is, the communication protocol of the T33 tunnel group does not match the communication protocol of the data stream 7, the gateway device H1 sends the data stream 7 to the gateway device H2, and the gateway device H2 sends the data stream 7 to the gateway devices S11 and S12 included in the spoke 1 site through the TTE33 tunnel and TTE34 tunnel included in the T32 tunnel group in a load balancing manner. Here, the gateway device H1 will not send the data stream 7 to the gateway device H3.

Considering the matching of communication protocols, the correct transmission of data stream is guaranteed.

Fig. 11 is a second schematic diagram of a data transmission system provided by an example of the present disclosure. The data transmission system shown in Fig. 11 includes one hub site, three spoke sites (i.e., a spoke 1 site, a spoke 2 site, and a spoke 3 site) and three transmission networks (i.e., a MSTP transmission network, a MPLS transmission network, and a 5G transmission network). The hub site is a three-gateway site, including three gateway devices (i.e., a gateway device H1, a gateway device H2, and a gateway device H3). The spoke 1 site, the spoke 2 site, and the spoke 3 site are dual-gateway sites, each including two gateway devices, that is, the spoke 1 site includes a gateway device S11 and a gateway device S12, the spoke 2 site includes a gateway device S21 and a gateway device S22, and the spoke 3 site includes a gateway device S31 and a gateway device S32.

The MSTP transmission network includes one WAN (i.e., WAN1), the MPLS transmission network includes one WAN (i.e., WAN2), and the 5G transmission network includes two WANs (i.e., WAN3 and WAN4). In the 5G transmission network, the priorities of the WANs can be further differentiated according to gateway information of different operators. That is, it is determined that the priority of WAN1 is equal to the priority of WAN2, the priority of WAN2 is larger than the priority of WAN3, and the priority of WAN3 is larger than the priority of WAN4.

In Fig. 11, different tunnels and tunnel groups are established between the gateway devices of the hub site and the gateway devices of the spoke sites through different WANs. Tunnels passing through WAN1 and WAN2 are active tunnels; tunnels passing through WAN3 and WAN4 are standby tunnels.

In response to determining that the spoke 3 site accessed to the data transmission system, one WAN port of the gateway device S31 of the spoke 3 site is accessed to WAN2, and one WAN port of the gateway device S32 is accessed to WAN3. The gateway device S31 obtains priority configuration information of WAN2, and further defines an attribute of a tunnel between the gateway device S31 and the hub site passing through WAN2. As described above, the tunnel between the gateway device S31 and the hub site passing through WAN2 is defined as an active tunnel. The gateway device S32 obtains priority configuration information of WAN3, and further defines an attribute of a tunnel between the gateway device S32 and the hub site passing through WAN3. As described above, the tunnel between the gateway device S32 and the hub site passing through WAN3 is defined as a standby tunnel. The above two tunnels are added to the cold standby strategy accordingly.

In the example of the present disclosure, a minimum granularity of the standby tunnel and the priority of the standby tunnel are introduced, and an operation dimension is configured on the settings of the transmission network and the operator. All accessed devices (i.e., gateway devices) only need to confirm the type of a network accessed by a WAN port (i.e., the accessed transmission network and operator), to complete the priority configuration of standby tunnels in the entire network while deploying tunnels. In response to determining that the corresponding transmission network is accessed, tunnel groups are deployed together with the priority configuration, and the newly added gateway devices (such as the gateway devices included in the spoke 3 site) can also be automatically added to the standby strategy. In response to determining that any of tunnel groups is abnormal, the gateway device can switch autonomously according to the priority strategy.

In the technical solution provided by the example of the present disclosure, in a Point to Multiple Point scenario, a unified operation and deployment of TTE tunnels can be performed based on the controller, and one fine-grained network tunnel standby strategy is provided to realize standby tunnels switched autonomously by gateway devices. It is suitable for multi-gateway scenarios and supports rate limiting to ensure that costs are controllable. While ensuring network forwarding security, high-value bandwidth can be saved in general operation and maintenance. At the same time, the unified strategy is easy to deploy and maintain, and the risk of error deployment is reduced.

Corresponding to the above-mentioned data transmission method, an example of the present disclosure further provides a data transmission apparatus, as shown in Fig. 12, which is applied to a first gateway device included in a first site, and the apparatus includes:

a first sending module 121, to send a first data stream to a second site through a first tunnel group, wherein the first tunnel group includes tunnels between the first gateway device and gateway devices included in the second site passing through a first WAN;

a second sending module 122, to send the first data stream to the second site through a second tunnel group in response to determining that all of the tunnels included in the first tunnel group are abnormal, wherein the second tunnel group includes tunnels between the first gateway device and the gateway devices included in the second site passing through a second WAN, and a priority of the second WAN is lower than that of the first WAN.

In the technical solution provided by the example of the present disclosure, the first gateway device included in the first site establishes tunnel groups, namely, the first tunnel group and the second tunnel group, with the gateway devices included in the second site respectively through the first WAN and the second WAN. In response to determining that the first gateway device sends a data stream to the gateway devices included in the second site, the first tunnel group corresponding to the high-priority first WAN is preferentially used to transmit the data stream, and the second tunnel group corresponding to the low-priority second WAN is in the silent status, that is, the first tunnel group is an active tunnel group between the first gateway device and the second site, and the second tunnel group is a standby tunnel group between the first gateway device and the second site. In response to determining that all of the tunnels included in the first tunnel group are abnormal, the first gateway device enables the standby tunnel group between the first gateway device and the second site, and then uses the second tunnel group to continue transmitting the data stream, thereby ensuring the stability of the service.

One WAN port can establish multiple tunnel groups with multiple sites. In the example of the present disclosure, in response to determining that one tunnel group is abnormal, only a standby tunnel group corresponding to the tunnel group needs to be enabled, and it is not necessary to enable standby tunnel groups corresponding to all tunnel groups under a WAN port which corresponds to the tunnel group. Compared with the control of a standby tunnel group through a WAN port in the related art, a control granularity of the silent setting in the cold standby technology is reduced, the issue of coarse control granularity is solved, and a standby tunnel group can be flexibly used for data transmission.

In some examples, the first site further includes a second gateway device; and the second sending module 122 is further to:

determine a status of each tunnel included in a third tunnel group in response to determining that all of the tunnels included in the first tunnel group are abnormal, wherein the third tunnel group includes tunnels between the second gateway device and the gateway devices included in the second site passing through the first WAN; and send the first data stream to the second site through the second tunnel group in response to determining that all of the tunnels included in the third tunnel group are abnormal.

In some examples, the second sending module 122 is further to:

send the first data stream to the second gateway device in response to determining that a tunnel included in the third tunnel group is normal, to cause the second gateway device to send the first data stream to the second site through the third tunnel group.

In some examples, the second sending module 122 is specifically to:

obtain a minimum value between a first bandwidth corresponding to one or more data streams carried in the first tunnel group and a preset bandwidth corresponding to the second tunnel group, wherein the preset bandwidth is a maximum bandwidth which is allowed to be used by a user to transmit a data stream by using the second tunnel group;

send the first data stream to the second site through the second tunnel group in response to determining that the minimum value is less than an available bandwidth of the second tunnel group.

In some examples, the first site further includes a second gateway device; and the second sending module 122 is further to:

send the first data stream to the second site through the second tunnel group and a fourth tunnel group in response to determining that the minimum value is greater than or equal to the available bandwidth of the second tunnel group, wherein the fourth tunnel group includes tunnels between the second gateway device and the gateway devices included in the second site passing through the second WAN.

In some examples, the second sending module 122 is specifically to:

select a tunnel that meets a preset link quality condition from the tunnels included in the fourth tunnel group;

send the first data stream to the second site through the tunnels included in the second tunnel group and the selected tunnel.

In some examples, the apparatus further includes a first determining module to determine the first bandwidth, wherein the first determining module is specifically to:

obtain a second bandwidth corresponding to one or more data streams carried in all of the tunnels included in the first tunnel group within a collection period;

calculate an average of second bandwidths corresponding to a preset number of collection periods, to obtain the first bandwidth.

In some examples, the apparatus further includes a second determining module to determine the available bandwidth, wherein the second determining module is specifically to:

obtain a third bandwidth corresponding to one or more data streams currently carried in all of the tunnels included in the second tunnel group;

calculate a difference value between a maximum bandwidth available for carrying one or more data streams of the second tunnel group and the third bandwidth, to obtain the available bandwidth.

In some examples, the apparatus further includes a third sending module, wherein the third sending module is to: send a second data stream to a third site through a fifth tunnel group, wherein the fifth tunnel group includes tunnels between the first gateway device and gateway devices included in the third site passing through the first WAN.

In some examples, the apparatus further includes a configuration module, wherein the configuration module is to:

receive an identifier of a target tunnel issued by a controller;

determine target priority configuration information corresponding to a WAN indicated by the target tunnel according to pre-stored correspondences between WANs and priority configuration information;

set the target priority configuration information attribute information of the target tunnel.

An example of the present disclosure further provides an electronic device, as shown in Fig. 13, including a processor 131, a communication interface 132, a memory 133 and a communication bus 134, wherein the processor 131, the communication interface 132 and the memory 133 communicate with each other through the communication bus 134;

the memory 133 is to store a computer program;

the processor 133 is to carry out any of the above data transmission methods when executing the program stored in the memory 133.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface 132 is for communication between the above electronic device and other devices.

The memory 133 may include a random access memory (RAM) or a non-volatile memory (non-volatile memory), such as at least one disk memory. Optionally, the memory 133 may also be at least one storage device located away from the processor 131.

The above-mentioned processor 131 can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gate or transistor logic devices, discrete hardware components.

In yet another example provided by the present disclosure, a computer-readable storage medium is further provided, wherein the computer-readable storage medium has a computer program stored therein, and the computer program, when executed by a processor, carries out any of the above-mentioned data transmission methods.

In yet another example provided by the present disclosure, a computer program product containing instructions is further provided, wherein instructions, when running on a computer, cause the computer to carry out any of the data transmission methods in the above examples.

In the above examples, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic medium (such as a floppy disk, a hard disk, a magnetic tape), optical medium (such as DVD), or semiconductor medium (such as Solid State Disk (SSD)) and the like.

It should be noted that in this article, relational terms such as first and second are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that comprises a series of elements not only comprises those elements, but also other elements that are not explicitly listed, or also comprise elements inherent in such a process, method, item, or device. Without further limitations, the elements limited by the statement "including one..." do not exclude the existence of other identical elements in the process, method, item, or device that comprises the elements.

The various examples in this specification are described in a related manner. Each example focuses on the differences from other examples, and the same and similar parts between the various examples can be referred to each other. Especially, for the examples of the apparatus, electronic device, storage medium and program product, the description is relatively simple because it is basically similar to the example of the method, and the relevant points can be referred to the partial description of the example of the method. The above is only a preferred example of the present disclosure and is not intended to limit the scope of protection of the present disclosure. Any modification, equivalent replacement, improvement, etc. made within the spirit and principles of this disclosure shall be included in the scope of protection of this disclosure.

**Claims**

1. A data transmission method, which is applied to a first gateway device included in a first site, the method comprising:

   sending a first data stream to a second site through a first tunnel group, wherein the first tunnel group includes tunnels between the first gateway device and gateway devices comprised in the second site passing through a first wide area network WAN;
   in response to determining that all of the tunnels comprised in the first tunnel group are abnormal, sending the first data stream to the second site through a second tunnel group, wherein the second tunnel group comprises tunnels between the first gateway device and the gateway devices comprised in the second site passing through a second WAN, and a priority of the second WAN is lower than that of the first WAN.

2. The method according to claim 1, wherein the first site further comprises a second gateway device; in response to determining that all of the tunnels comprised in the first tunnel group are abnormal, the method further comprises:

   determining a status of each tunnel comprised in a third tunnel group, wherein the third tunnel group comprises tunnels between the second gateway device and the gateway devices comprised in the second site passing through the first WAN;
   in response to determining that all of the tunnels comprised in the third tunnel group are abnormal, sending the first data stream to the second site through the second tunnel group.

3. The method according to claim 2, wherein the method further comprises:
   in response to determining that a tunnel comprised in the third tunnel group is normal, sending the first data stream to the second gateway device, to cause the second gateway device to send the first data stream to the second site through the third tunnel group.

4. The method according to any one of claims 1 to 3, wherein sending the first data stream to the second site through the second tunnel group comprises:

   obtaining a minimum value between a first bandwidth corresponding to one or more data streams carried in the first tunnel group and a preset bandwidth corresponding to the second tunnel group, wherein the preset bandwidth is a maximum bandwidth that is allowed to be used by a user to transmit a data stream by using the second tunnel group;
   in response to determining that the minimum value is less than an available bandwidth of the second tunnel group, sending the first data stream to the second site through the second tunnel group.

5. The method according to claim 4, wherein the first site further comprises a second gateway device; the method further comprises:
   in response to determining that the minimum value is greater than or equal to the available bandwidth of the second tunnel group, sending the first data stream to the second site through the second tunnel group and a fourth tunnel group, wherein the fourth tunnel group comprises tunnels between the second gateway device and the gateway devices comprised in the second site passing through the second WAN.

6. The method according to claim 5, wherein sending the first data stream to the second site through the second tunnel group and the fourth tunnel group comprises:

   selecting a tunnel that meets a preset link quality condition from the tunnels comprised in the fourth tunnel group;
   sending the first data stream to the second site through the tunnels comprised in the second tunnel group and the selected tunnel.

7. The method according to claim 4, wherein the first bandwidth is determined by:

   obtaining a second bandwidth corresponding to one or more data streams carried in all of the tunnels comprised in the first tunnel group within a collection period;
   calculating an average of second bandwidths corresponding to a preset number of collection periods, to obtain the first bandwidth.

8. The method according to claim 4, wherein the available bandwidth is determined by:

   obtaining a third bandwidth corresponding to one or more data streams currently carried in all of the tunnels comprised in the second tunnel group;
   calculating a difference value between a maximum bandwidth available for carrying one or more data streams of the second tunnel group and the third bandwidth, to obtain the available bandwidth.

9. The method according to any one of claims 1 to 3, wherein the method further comprises:
   sending a second data stream to a third site through a fifth tunnel group, wherein the fifth tunnel group comprises tunnels between the first gateway device and gateway devices comprised in the third site passing through the first WAN.

10. The method according to any one of claims 1 to 3, wherein the method further comprises:

    receiving an identifier of a target tunnel issued by a controller;
    determining target priority configuration information corresponding to a WAN indicated by the target tunnel according to pre-stored correspondences between WANs and priority configuration information;
    setting the target priority configuration information as attribute information of the target tunnel.

11. An electronic device, comprising a processor, a communication interface, a memory and a communication bus, wherein the processor, the communication interface and the memory communicate with each other through the communication bus;

    the memory is to store a computer program;
    the processor is to carry out the method according to any one of claims 1 to 10 when executing the program stored in the memory.

12. A computer-readable storage medium having a computer program stored therein, wherein the computer program, when executed by a processor, carries out the method according to any one of claims 1 to 10.

**Amended claims in accordance with Rule 137(2) EPC.**

1. A data transmission method, applied to a first gateway device included in a first site, **characterized in that** the method comprises:

   sending a first data stream to a second site through a first tunnel group, wherein the first tunnel group includes tunnels between the first gateway device and gateway devices comprised in the second site passing through a first wide area network, WAN, (S21, S31, S41);
   in response to determining that all of the tunnels comprised in the first tunnel group are abnormal, sending the first data stream to the second site through a second tunnel group, wherein the second tunnel group comprises tunnels between the first gateway device and the gateway devices comprised in the second site passing through a second WAN, and a priority of the second WAN is lower than that of the first WAN (S22), said priority is determined according to cost and/or a link quality metric.

2. The method according to claim 1, wherein the first site further comprises a second gateway device; in response to determining that all of the tunnels comprised in the first tunnel group are abnormal, the method further comprises:

determining a status of each tunnel comprised in a third tunnel group, wherein the third tunnel group comprises tunnels between the second gateway device and the gateway devices comprised in the second site passing through the first WAN (S32);
in response to determining that all of the tunnels comprised in the third tunnel group are abnormal, sending the first data stream to the second site through the second tunnel group.

3. A data transmission method, applied to a first gateway device included in a first site, **characterized in that** the first site further comprises a second gateway device, the method comprises:

sending a first data stream to a second site through a first tunnel group, wherein the first tunnel group includes tunnels between the first gateway device and gateway devices comprised in the second site passing through a first wide area network, WAN, (S21, S31, S41);
in response to determining that all of the tunnels comprised in the first tunnel group are abnormal, determining a status of each tunnel comprised in a third tunnel group, wherein the third tunnel group comprises tunnels between the second gateway device and the gateway devices comprised in the second site passing through the first WAN (S32, S43);
in response to determining that all of the tunnels comprised in the third tunnel group are abnormal, sending the first data stream to the second site through a second tunnel group, wherein the second tunnel group comprises tunnels between the first gateway device and the gateway devices comprised in the second site passing through a second WAN, and a priority of the second WAN is lower than that of the first WAN (S33), said priority is determined according to cost and/or a link quality metric;
in response to determining that a tunnel comprised in the third tunnel group is normal, sending the first data stream to the second gateway device, to cause the second gateway device to send the first data stream to the second site through the third tunnel group (S44).

4. The method according to any one of claims 1 to 3, wherein sending the first data stream to the second site through the second tunnel group comprises:

obtaining a minimum value of a first bandwidth corresponding to one or more data streams carried in the first tunnel group and a preset bandwidth corresponding to the second tunnel group, wherein the preset bandwidth is a maximum bandwidth that is allowed to be used by a user to transmit a data stream by using the second tunnel group;
in response to determining that the minimum value is less than an available bandwidth of the second tunnel group, sending the first data stream to the second site through the second tunnel group.

5. A data transmission method, applied to a first gateway device included in a first site, **characterized in that** the first site further comprises a second gateway device; the method comprises:

sending a first data stream to a second site through a first tunnel group, wherein the first tunnel group includes tunnels between the first gateway device and gateway devices comprised in the second site passing through a first wide area network, WAN, (S21, S31, S41);
in response to determining that all of the tunnels comprised in the first tunnel group are abnormal, determining a status of each tunnel comprised in a third tunnel group, wherein the third tunnel group comprises tunnels between the second gateway device and the gateway devices comprised in the second site passing through the first WAN (S32, S43);
in response to determining that all of the tunnels comprised in the third tunnel group are abnormal, obtaining a minimum value of a first bandwidth corresponding to one or more data streams carried in the first tunnel group and a preset bandwidth corresponding to a second tunnel group (S45), wherein the preset bandwidth is a maximum bandwidth that is allowed to be used by a user to transmit a data stream by using the second tunnel group, wherein the second tunnel group comprises tunnels between the first gateway device and the gateway devices comprised in the second site passing through a second WAN;
in response to determining that the minimum value is greater than or equal to the available bandwidth of the second tunnel group, sending the first data stream to the second site through the second tunnel group and a fourth tunnel group, wherein the fourth tunnel group comprises tunnels between the second gateway device and the gateway devices comprised in the second site passing through the second WAN (S48);

wherein a priority of the second WAN is lower than that of the first WAN, said priority is determined according to cost and/or a link quality metric.

6. The method according to claim 5, wherein sending the first data stream to the second site through the second tunnel group and the fourth tunnel group comprises:

selecting a tunnel that meets a preset link quality condition from the tunnels comprised in the fourth tunnel group;
sending the first data stream to the second site through the tunnels comprised in the second tunnel group and the selected tunnel.

7. The method according to claim 4, wherein the first bandwidth is determined by:

obtaining a second bandwidth corresponding to one or more data streams carried in all of the tunnels comprised in the first tunnel group within a collection period;
calculating an average of second bandwidths corresponding to a preset number of collection periods, to obtain the first bandwidth.

8. The method according to claim 4, wherein the available bandwidth is determined by:

obtaining a third bandwidth corresponding to one or more data streams currently carried in all of the tunnels comprised in the second tunnel group;
calculating a difference value between a maximum bandwidth available for carrying one or more data streams of the second tunnel group and the third bandwidth, to obtain the available bandwidth.

9. The method according to any one of claims 1 to 3, wherein the method further comprises:
sending a second data stream to a third site through a fifth tunnel group, wherein the fifth tunnel group comprises tunnels between the first gateway device and gateway devices comprised in the third site passing through the first WAN (S42).

10. The method according to any one of claims 1 to 3, wherein the method further comprises:

receiving an identifier of a target tunnel issued by a controller (S51);
determining target priority configuration information corresponding to a WAN indicated by the target tunnel according to pre-stored correspondences between WANs and priority configuration information (S52);
setting the target priority configuration information as attribute information of the target tunnel (S53).

11. An electronic device, comprising a processor (131), a communication interface (132), a memory (133) and a communication bus, wherein the processor (131), the communication interface (132) and the memory (133) communicate with each other through the communication bus;

the memory (133) is to store a computer program;
the processor (131) is to carry out the method according to any one of claims 1 to 10 when executing the program stored in the memory (133).

12. A computer-readable storage medium having a computer program stored therein, wherein the computer program, when executed by a processor, carries out the method according to any one of claims 1 to 10.

Hub

H1   H2   H3

transmission
network 2

WAN1/
transmission
network 1

WAN2    WAN3

S11  S12
spoke 1

S21  S22
spoke 2

Fig.1

| sending a first data stream to a second site through a first tunnel group, wherein the first tunnel group includes tunnels between the first gateway device and gateway devices included in the second site passing through a first WAN | S21 |

| in response to determining that all of the tunnels included in the first tunnel group are abnormal, sending the first data stream to the second site through a second tunnel group, wherein the second tunnel group includes tunnels between the first gateway device and the gateway devices included in the second site passing through a second WAN, and a priority of the second WAN is lower than that of the first WAN | S22 |

Fig.2

sending a first data stream to a second site through a first
tunnel group, wherein the first tunnel group includes tunnels
between the first gateway device and gateway devices
included in the second site passing through a first WAN

S31

in response to determining that all of the tunnels included in
the first tunnel group are abnormal, determining a status of
each tunnel included in a third tunnel group, wherein the third
tunnel group includes tunnels between the second gateway
device included in the first site and the gateway devices
included in the second site passing through the first WAN

S32

in response to determining that all of the tunnels included in
the third tunnel group are abnormal, sending the first data
stream to the second site through a second tunnel group,
wherein the second tunnel group includes tunnels between the
first gateway device and the gateway devices included in the
second site passing through a second WAN, and a priority of
the second WAN is lower than that of the first WAN

S33

Fig.3

S41

S42

sending a first data stream to a second site through a first tunnel group, wherein the first tunnel group includes tunnels between a first gateway device and gateway devices included in the second site passing through a first WAN

sending a second data stream to a third site through a fifth tunnel group, wherein the fifth tunnel group includes tunnels between the first gateway device and gateway devices included in the third site passing through the first WAN

in response to determining that all of the tunnels included in the first tunnel group are abnormal, determining a status of each tunnel included in a third tunnel group, wherein the third tunnel group includes tunnels between a second gateway device included in the first site and the gateway devices included in the second site passing through the first WAN

S43

in response to determining that a tunnel included in the third tunnel group is normal, sending the first data stream to the second gateway device, to cause the second gateway device to send the first data stream to the second site through the third tunnel group

S44

in response to determining that all of the tunnels included in the third tunnel group are abnormal, obtaining a minimum value between a first bandwidth corresponding to one or more data streams carried in the first tunnel group and a preset bandwidth corresponding to the second tunnel group

S45

S46

determining whether the minimum value is less than an available bandwidth of the second tunnel group

no

yes

sending the first data stream to the second site through the second tunnel group

S47

sending the first data stream to the second site through the second tunnel group and a fourth tunnel group, wherein the fourth tunnel group includes tunnels between the second gateway device and the gateway devices included in the second site passing through a second WAN

S48

Fig.4

S51

| receiving an identifier of a target tunnel issued by a controller |

↓

S52

| determining target priority configuration information corresponding to a WAN indicated by the target tunnel according to pre-stored correspondences between WANs and priority configuration information |

↓

S53

| setting the target priority configuration information as attribute information of the target tunnel |

Fig.5

Fig.6

Fig.7

Fig.8

Hub

T31 { TTE31
       TTE32

H1   H2   H3

TTE37 } T34
TTE38

T32 { TTE33
       TTE34

TTE39 } T35
TTE310

T33 { TTE35
       TTE36

WAN1   WAN2

WAN3/
transmission
network 2

transmission
network 1

S11   S12

spoke 1

Fig.9

Hub

T41 { TTE41
       TTE42

H1   H2   H3

TTE47 } T44
TTE48

T42 { TTE43
       TTE44

TTE49 } T45
TTE410

T43 { TTE45
       TTE46

transmission
network 2

WAN1   WAN2   WAN3   WAN4

transmission
network 1

TTE411 } T46
TTE412

S11   S12

spoke 1

Fig.10

Hub
H1   H2   H3

WAN1/MSTP

WAN2/MPLS

WAN3   WAN4

5G

S11   S12        S21   S22        S31   S32
spoke 1          spoke 2          spoke 3

Fig.11

121                        122
first sending        second
module               sending
                        module

Fig.12

131
processor

134

memory        133

communication        132
interface

Fig.13

**EUROPEAN SEARCH REPORT**

Europäisches Patentamt
European Patent Office
Office européen des brevets

**Application Number**

EP 24 21 6544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/268605 A1 (CAMPBELL GARY L [US] ET AL) 29 October 2009 (2009-10-29) <br> * paragraph [0007] - paragraph [0024]; figure 1 * <br> * paragraph [0032] - paragraph [0044]; figure 3 * <br> ----- | 1-12 | INV. <br> H04L12/46 <br> H04L45/00 |
| X | Anonymous: "Path protection - Wikipedia - Version of 11 February 2024", <br> , <br> 11 February 2024 (2024-02-11), XP093268864, <br> Retrieved from the Internet: <br> URL:https://en.wikipedia.org/w/index.php?title=Path_protection&oldid=1206092450 <br> * the whole document * <br> ----- | 1-12 | |
| A | Anonymous: "Dynamic routing - Wikipedia - Version of 26 April 2024", <br> , <br> 26 April 2024 (2024-04-26), XP093268860, <br> Retrieved from the Internet: <br> URL:https://en.wikipedia.org/w/index.php?title=Dynamic_routing&oldid=1220929523 <br> * the whole document * <br> ----- | 1-12 | **TECHNICAL FIELDS SEARCHED (IPC)** <br><br> H04L |

The present search report has been drawn up for all claims

| Place of search | Date of completion of the search | Examiner |
|---|---|---|
| Munich | 16 April 2025 | Raible, Markus |

EPO FORM 1503 03.82 (P04C01)

## ANNEX TO THE EUROPEAN SEARCH REPORT
## ON EUROPEAN PATENT APPLICATION NO.

EP 24 21 6544

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2009268605 A1 | 29-10-2009 | NONE | |

EPO FORM P0459

For more details about this annex : see Official Journal of the European Patent Office, No. 12/82